# EUROPEAN PATENT SPECIFICATION

(11) **EP 3 083 247 B1**
(45) Date of publication and mention of the grant of the patent: **03.10.2018**
(21) Application number: 14871346.4
(22) Date of filing: 19.12.2014
(51) Int. Cl.: B32B 37/00, B32B 23/10, B32B 7/02, B32B 5/26, D04H 1/4374, D04H 1/44, D04H 1/498, B32B 5/02, B32B 5/06, B32B 7/08, B32B 27/12, B32B 27/32, B32B 37/10, B32B 3/26, B32B 38/00, D04H 1/56, D04H 3/16

(54) **HYDROENTANGLED ELASTIC FILM-BASED, STRETCH-BONDED COMPOSITES AND METHODS OF MAKING SAME**
WASSERVERNADELTE, AUF ELASTISCHER FOLIE BASIERENDE, DEHNUNGSVERBUNDENE VERBUNDSTOFFE UND VERFAHREN ZUR HERSTELLUNG DAVON
COMPOSITES LIÉS SOUS EXTENSION, À BASE DE FILM ÉLASTIQUE HYDRO-ENCHEVÊTRÉ ET PROCÉDÉ DE FABRICATION ASSOCIÉ

(30) Priority: 20.12.2013 US 201361919475 P
(43) Date of publication of application: 26.10.2016
(73) Proprietor: Kimberly-Clark Worldwide, Inc., Neenah, Wisconsin 54956 (US)
(72) Inventor: JENKINS, Shawn E., Duluth, Georgia 30097 (US); BAKER, Joseph K., Cumming, Georgia 30040 (US)
(74) Representative: Dehns
(86) International application number: PCT/US2014/071546
(87) International publication number: WO 2015/095731

(56) References cited:
- EP-A2- 0 685 586
- WO-A1-2005/068702
- US-A- 4 935 287
- US-A1- 2002 016 122
- US-A1- 2005 273 071
- US-A1- 2008 095 978
- US-A1- 2010 196 672
- US-A1- 2010 196 672

## Description

### FIELD OF THE INVENTION

The present invention is generally directed to absorbent and elastic laminates. In particular, the present invention is directed to elastic laminates with hydroentangled components and their use in various product applications.

### BACKGROUND OF THE INVENTION

Traditional hydroentanglement processes (also known as hydraulic entanglement) are processes in which fluid jets are used to cause a mingling or entangling of fibers in a single sheet, or from a first fibrous sheet into an adjacent second fibrous sheet. Such processes allow for the incorporation of natural or synthetic fibers from a first sheet into a second web or fibrous sheet, so as to impart improved properties to the sheet that would otherwise not have been present in the second sheet. For example, the use of hydroentangling technology can impart improved feel or absorbency to a pre-formed web, which would otherwise not have been originally present. Such hydroentangled fibers may be a wide variety of fibers such as for example, cellulosic or synthetic staple fibers or synthetic substantially continuous fibers as are known in the patent art. Hydroentanglement technology is described for example, in U.S. Pat. Nos. 4,144,370 to Boulton, 4,808,467 to Suskind et al., 4,931,355, 4,950,531 and 4,970,104 to Radwanski.

The natural or synthetic fibers of a web which are entangled into a second web are often not elastic or extensible, but can be. Nevertheless, such fibers can be hydroentangled into a coform web or an elastic knit or net-like web or sheet, to create or alter a laminate structure which may be in a final form of a knit-like web material or elastic netting containing the hydroentangled fibers. The bulkiness of such materials has proven to be somewhat limited. Examples of various hydroentangled webs are illustrated in U.S. Pat. Nos. 4,775,579 to Hagy et al, 4,879,170 and 4,939,016 to Radwanski et al., 5,334,446 and 5,431,991 to Quantrille, 5,635,290 to Stopper et al., and 6,177,370 to Skoog et al.

In such elastic laminates, an elastic substrate is described as being pre-stretched, and another fibrous layer of non-elastic material is then hydroentangled to the elastic substrate across, in "spots", or at spaced-apart locations. That pre-stretching configuration is often necessary to allow the pre-stretched elastic substrate to later contract after the hydroentangling step. If the non-elastic layer is hydroentangled to the pre-stretched elastic layer over its entire surface, that hydroentangling often "locks" the stretched elastic layer into its stretched state, thereby making it unable to demonstrate its full elastic capabilities. Similarly, if an inelastic layer of fibers was hydroentangled to an unstretched elastic layer over a portion of, or the elastic layer's entire surface, such unstretched elastic layer would also be locked in place either at the portion of hydroentanglement, or the entire surface by the inelastic mingled layer, thereby preventing it from demonstrating its full elastic properties, without the tearing or rupturing of the inelastic mingled fibrous layer.

In such pre-stretched elastic laminates noted above, it has also been difficult to accomplish sufficient uniform entanglement to create a relatively homogeneous elastic material. Such natural or synthetic staple fibers (which are typically absorbent but inelastic) that are often used for entanglement can become dislodged from the elastic composite due to limited entanglement, and a lack of coordination of extensibility attributes between the layers. The dislodging of fibers can produce an irregular or fuzzy substrate surface, which results in pilling of fibers off of the entangled webs. Such fuzzy topography is not always desirable. There is therefore a need for a relatively homogenous elastic and absorbent laminate construction.

A wide variety of lofty high bulk, machine-direction, stretch-bonded elastic laminates are known from the patent art. Machine-direction, stretch-bonded elastic laminates are traditionally made of two or more layers (each referred to as sub-layers) of hydrophobic polymer materials, which do not offer water absorbency benefits. Machine-direction, stretch-bonded elastic laminates are made from at least a machine-direction, elastic layer, that is, an elastic layer that is capable of elongation and retraction at least along the machine-direction. The machine-direction elastic layer has been bonded to one or more inelastic layers (also known as facings or facing layers) at various points while the elastic layer is in a machine-direction, stretched state. The laminates are allowed to retract, forming gathers in the inelastic facing layer(s) between bond points (gathers running across the cross-machine direction), and provide subsequent elasticity to the laminate in the machine-direction. The laminates can be extended (and retract) in the machine-direction to the extent of the open gather dimensions. These elastic laminates are used in a wide variety of product applications, and have the ability to be stretched repetitively, and once the stretching force is removed, the material can retract and recover. These stretch-bonded laminates are distinguishable from neck-bonded laminates, which are typically extensible in the cross-machine direction. Neck bonded laminates are described in U.S. Pat. No. 5,226,992 to Morman et al.

The stretch-bonded laminate layers are bonded via adhesive or other traditional bonding techniques, such as through thermal, pressure, ultrasonic or autogeneous bonding methods as are known in the art. For example, stretch-bonded laminates may be made from an elastic fibrous web (such as an elastic meltblown nonwoven layer) that is stretched in the machine-direction prior to bonding (bonding via tacky web polymer, adhesive, or other method) to one or more inelastic nonwoven webs (such as a spunbond nonwoven layer), with the elastic and inelastic material laminate then allowed to retract in the machine-direction, and form lofty ripple-like gathers directed along the cross-machine direction of the laminate after bonding. As noted, both the elastic and inelastic layers are each typically made from hydrophobic polymers and therefore are not absorbent to aqueous liquids. Such layers may for example, be formed from block copolymers, polyolefins, polyurethanes, or combinations of such. Machine-direction, stretch-bonded elastic web laminates are described in U.S. Pat. Nos. 4,720,415 to Vander Wielen et al. and 5,366,793 to Fitts et al.

Alternatively, machine-direction, stretch-bonded elastic laminates can include uni-directional, generally parallel, elastic strands or filaments as the elastic layer (which are elastic in the machine-direction), which filaments are placed alongside one, or sandwiched between two or more inelastic layers. As with the previously described web laminates, such elastic filament-based, materials are stretched along the machine-direction and then bonded while in the stretched state, to one or more inelastic layers. The bonded laminate is then allowed to retract in the machine-direction, and form gathers in the filamentous structure. Such machine-direction, elastic filament-based laminates are illustrated in U.S. Pat. Nos. 5,385,775 to Wright, and 6,969,441 to Welch et al. The strand/filament-based, stretch-bonded laminates may be produced on a "horizontal" (as in Wright) or "vertical" (as in Welch) manufacturing platform as described in the above references. A stretch-bonded laminate from a vertical manufacturing platform is also described in U.S. Pat. No. 6,978,486 to Zhou et al. Such stretch-bonded laminates can include an inelastic nonwoven layer on one or both sides of the elastic layer. A single-sided, stretch-bonded laminate is described for example in U.S. Pat. No. 7,601,657 to Zhou et. al.

Finally, machine-direction, stretch-bonded elastic laminates may be formed using a machine-direction, stretched elastic film layer which is bonded in its stretched state to one or more inelastic layers, and then allowed to retract. Such machine-direction, elastic film-based layer can be nonapertured or apertured. An apertured elastic film-based laminate is described in U.S. Pat. No. 7,803,244 to Siqueira et al.

While all of these stretch-bonded laminates offer useful elastic material performance as well high bulk and pleasing textural feel, they lack water absorbency/hydrophilicity attributes throughout their entire structure, as a result of their elastic and inelastic polymer compositions. In the case of elastic, film-based laminates specifically, the use of an unapertured hydrophobic film as an elastic layer in a laminate physically blocks the movement of water from one side of the laminate to the other, thereby generally making use of such a material in an absorbent article or wipe construction impractical. The general hydrophobicity of an apertured elastic film, likewise limits the use of such a material in an absorbent article or wipe construction. While it is known to laminate a previously hydroentangled nonwoven layer construction to an apertured film, such as in the previously noted 7,803,244 reference, such construction limits absorbency attributes within the overall composite, and limits the flexibility of such elastic composite, especially if adhesive is used to bond the layers together. Such limited use of hydroentangled layers results in a non-uniform material. Further, apertures in hydrophobic elastic films have a tendency to close or otherwise restrict the movement of fluid through their structure. There is therefore a need for high bulk, stretch-bonded laminates which can be manufactured to be water absorbent, without sacrificing elastic performance. A further need exists for stretch-bonded laminates which can be manufactured to be both water and oil absorbent.

Depending on the polymer formulations and elastic component arrangements of the previously described stretch-bonded laminates, separate adhesive or other bonding techniques may be necessary to adhere the elastic components to the inelastic components. Such adhesive adds production costs to the laminates and may also impact the flexibility/stiffness of the laminate materials. There is therefore a need for high bulk, stretch-bonded laminates which would not require adhesive, or as much adhesive or other costly bonding methods for structural integrity, and which could also provide water and/or oil absorbency functionality.

Finally, the lofty nature and chemical makeup of the previously described stretch-bonded elastic laminate materials has made their bonding with additional absorbent layers difficult. If such laminates are adhesively bonded with another absorbent fibrous sheet while in a relaxed state, such laminates are locked from exhibiting their elasticity, without first rupturing the attached absorbent fibrous sheet. There is therefore a need for elastic stretch-bonded laminates that can be manufactured to be absorbent, without sacrificing elastic performance. There is a need for such elastic materials which demonstrate a relatively high degree of durability, without significant diminishment of the elastic extensibility and recovery of the original elastic layer or stretch-bonded elastic laminate layer.

A prior art process for making a stretch-bonded elastic nonwoven composite and a stretch-bonded elastic nonwoven composite having the features of the preamble to claims 1 and 11 is disclosed in US 2005/0273071.

### SUMMARY OF THE INVENTION

A process for making a stretch-bonded elastic nonwoven composite includes the steps of a) providing a machine-direction elastic, apertured film-based, stretch-bonded nonwoven laminate layer, itself having an apertured elastic film layer and at least one inelastic layer; b) stretching the stretch-bonded laminate layer in the machine direction such that at least one inelastic layer is in a generally flattened configuration, and no rupture of the inelastic layer occurs; c) providing a hydrophilic fibrous layer on the stretched, apertured film-based, stretch-bonded nonwoven laminate layer, the fibrous layer including either staple fibers, substantially continuous fibers, pulp fibers or a combination thereof; d) hydroentangling the fibers of the hydrophilic fibrous layer into the elastic stretched, apertured film-based, stretch-bonded nonwoven laminate layer to produce a hydroentangled stretch-bonded elastic nonwoven composite that is absorbent to both aqueous and oil-based liquids; e) allowing the hydroentangled stretch-bonded elastic nonwoven composite to dry and relax, alternatively to relax and dry, alternatively to concurrently relax and dry; and f) storing the hydroentangled stretch-bonded elastic nonwoven composite or moving the composite to a further product manufacturing process.

Alternatively in the process, the machine direction elastic apertured film-based, stretch-bonded laminate includes an elastic apertured mono-layered film. Alternatively, such film may be a multilayered elastic apertured film, such as having one or more skin layers on a base or core film layer. In a further alternative embodiment of the process, the elastic apertured film includes apertures configured in multiple directions along the film dimensions. In yet another alternative embodiment of the process, the elastic apertured monolayered or multi-layered film includes apertures having a longer dimension primarily along the cross-machine direction. In still a further alternative embodiment, the elastic apertured monolayered or multilayered film includes apertures configured in a zig-zag, or consecutively staggered configuration. In still a further alternative embodiment of the process, the machine direction elastic apertured film-based, stretch bonded laminate includes two inelastic layers, one of each inelastic layer bonded to a separate side of a middle elastic apertured film layer. In another alternative of the process, the stretching step is accomplished by a series of progressively faster moving rolls. In a further alternative embodiment of the process, the stretching step is accomplished by a pair of rolls in an S-wrap arrangement in which the ratio of speeds between the second roll farthest from the laminate source and the first roll closer to the laminate source is between about 1.1:1 and 5:1. In another alternative embodiment of the process, the ratio of speeds is between about 1.5:1 and 3:1. In still another alternative embodiment, the stretching step may be accomplished by a nip point formed by adjacently, co-rotating foraminous web carrier surfaces, such as that formed by the contact point between a forming wire and transfer wire in a wet laid fiber process, in series with progressively faster moving rolls or S-wraps.

In still another alternative embodiment of the process the hydrophilic fibrous layer is cellulosic based. Such hydrophilic fibrous layer may be present initially in a basis weight range of between about 2 and 200 gsm. In still a further alternative embodiment of the process the pressure of fluid utilized in the hydroentanglement step is between about 200 and 5000 psi (about 1.4MPa and 34.5 MPa), alternatively between about 500 and 5000 psi (about 3.4MPa and 34.5 MPa), still alternatively between about 1400 and 3000 psi (about 9.65MPa and 20.7MPa), still alternatively between about 1400 and 2900 psi (about 9.65MPa and 20MPa).

In yet another alternative embodiment of the process, the hydroentangled webs are moved passed a hydroentanglement manifold at a distance of between about 0.25 inch and 2 inches (about 6.35mm and 50.8mm). In another alternative embodiment of the process the elastic apertured film layer of the elastic apertured film-based, stretch-bonded laminate has an open aperture area in the film layer of between about 2 and 40 percent before hydroentanglement. In yet another alternative embodiment of the inventive process, the open aperture area in the film layer is between about 10 and 30 percent.

A stretch-bonded elastic nonwoven composite of the invention includes a machine-direction elastic apertured film-based, stretch-bonded laminate layer that has been hydroentangled throughout all of its laminate layers with a hydrophilic fibrous layer. Alternatively, the stretch-bonded elastic nonwoven composite includes an apertured film-based, stretch-bonded laminate layer comprised of a middle apertured, machine-direction elastic film that has been laminated between two inelastic nonwoven layers. Still in a further alternative embodiment, the two inelastic nonwoven layers are selected from the group consisting of spunbond, meltblown, and bonded carded webs. In yet another alternative embodiment, the hydrophilic fibrous layer has a basis weight of between about 2 and 200 gsm and includes cellulosic fibers. The invention also contemplates a stretch-bonded elastic nonwoven composite that is made from the methods described herein. Finally, the invention also contemplates a wipe, medical product or personal care product made from the stretch-bonded elastic nonwoven composites described herein.

Objects and advantages of the invention are set forth below in the following description, or may be learned through practice of the invention.

### BRIEF DESCRIPTION OF THE DRAWINGS

A full and enabling disclosure of the present invention is set forth more particularly in the remainder of the specification, including reference to the accompanying figures, in which:

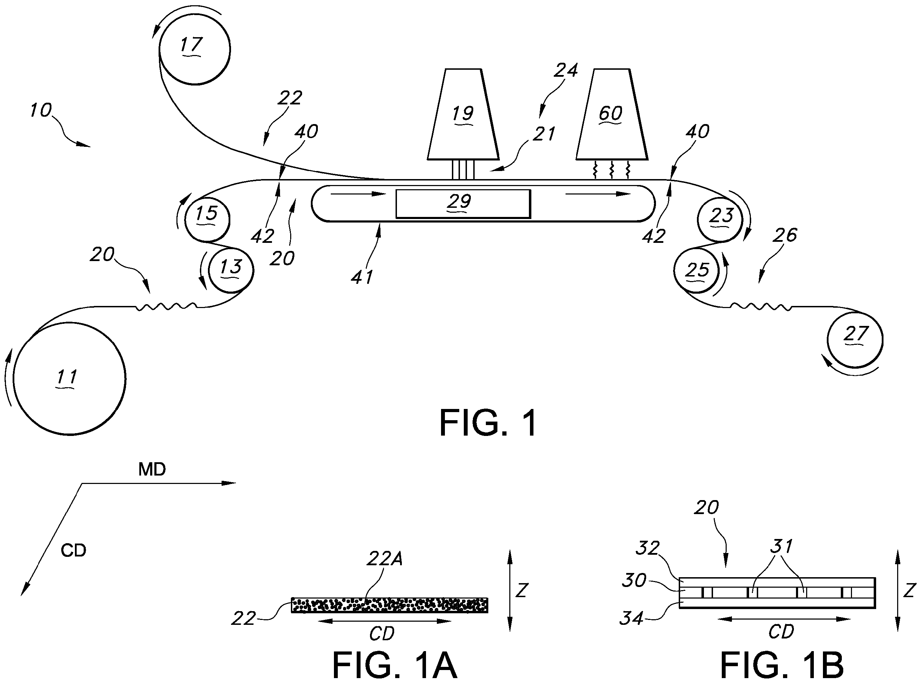

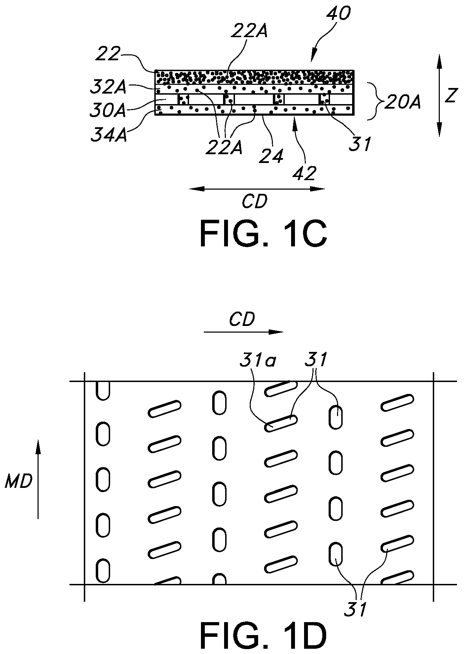

Figure 1 illustrates a schematic view of a manufacturing process generally along the machine direction, in accordance with the invention.
Figure 1A illustrates a cross-sectional representational view taken along the cross-machine direction, of a hydrophilic layer 22 before it is to be hydroentangled with a machine-direction, elastic apertured film-based, stretch-bonded laminate layer 20.
Figure 1B illustrates a cross-sectional representational view taken along the cross-machine direction, of a machine-direction, elastic apertured film-based, stretch-bonded laminate layer 20 before it is to be hydroentangled with a hydrophilic layer 22.
Figure 1C illustrates a cross-sectional representational view taken along the cross-machine direction, of a machine direction, elastic apertured film-based, stretch-bonded composite 24, which includes a machine-direction elastic apertured film-based, stretch-bonded laminate layer 20 (itself of three sub-layers) and a hydrophilic layer 22 hydroentangled with the stretch-bonded laminate layer in accordance with the method of Figure 1.
Figure 1D illustrates a top plan view of a film aperture pattern which may be used in the machine-direction, elastic apertured film-based, stretch-bonded laminate layer 20.

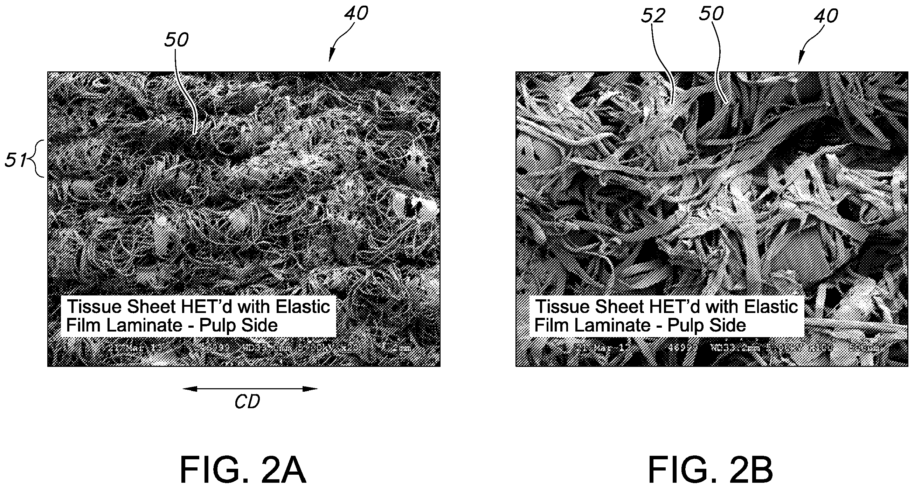

Figure 2A is a photomicrograph of a machine-direction, elastic apertured film-based, stretch-bonded composite 24 made from a machine-direction, elastic apertured film-based, stretch-bonded laminate layer 20 (of itself three layers), viewed from the pulp side 40 (SEM 5.00kV x 20, with 2 mm scale view).
Figure 2B is a photomicrograph of a machine-direction, elastic apertured film-based, stretch-bonded composite 24 made from a machine-direction, elastic apertured film-based, stretch- bonded laminate layer 20 (of itself three layers), viewed from the pulp side 40 (SEM 5.00kV x 100, with 500 micron scale view).

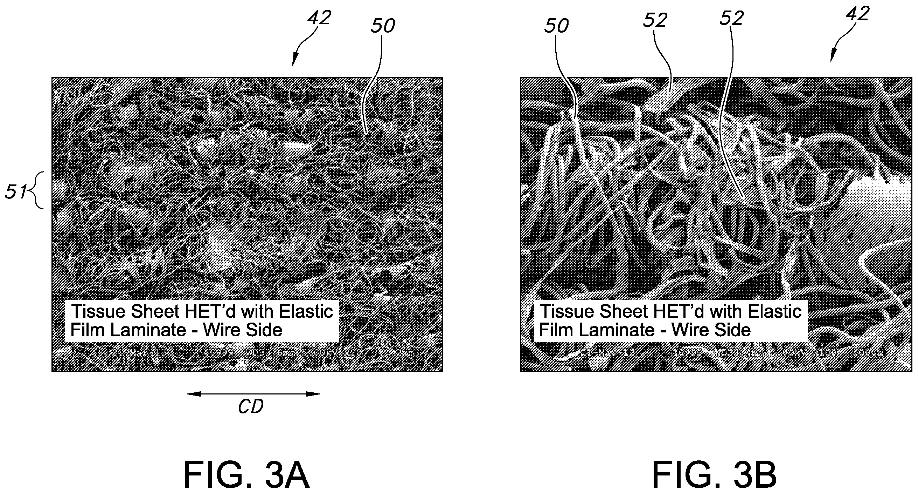

Figure 3A is a photomicrograph of a machine-direction, elastic apertured film-based, stretch-bonded composite 24, made from a machine-direction, elastic apertured film-based, stretch-bonded laminate layer 20 (of itself three layers), viewed from the wire side 42 (SEM 5.00kV x 20, with 2 mm scale view).
Figure 3B is a photomicrograph of a machine-direction, elastic apertured film-based, stretch-bonded composite 24, made from a machine-direction, elastic apertured film-based, stretch-bonded laminate layer 20 (of itself three layers), viewed from the wire side 42 (SEM 5.00kV x 100, with 500 micron scale view).

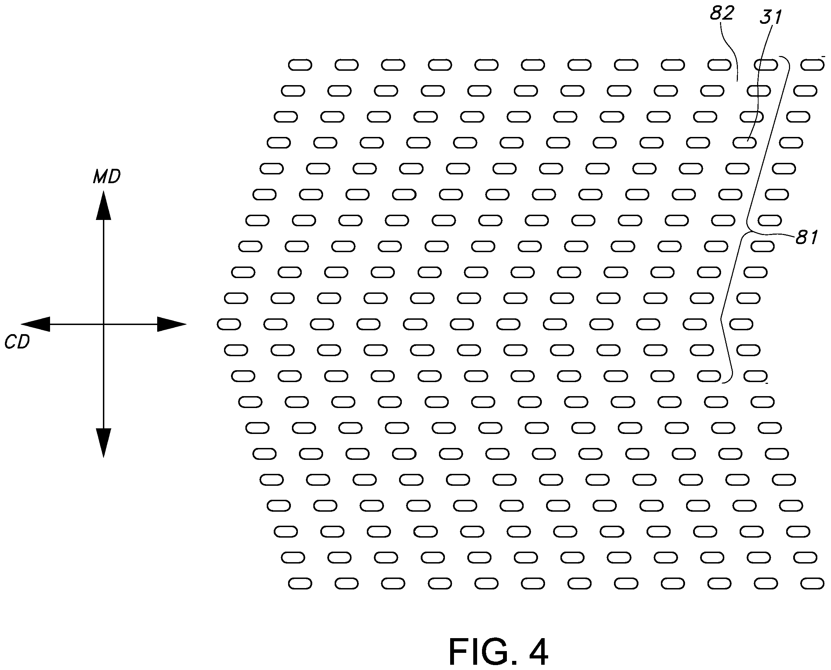

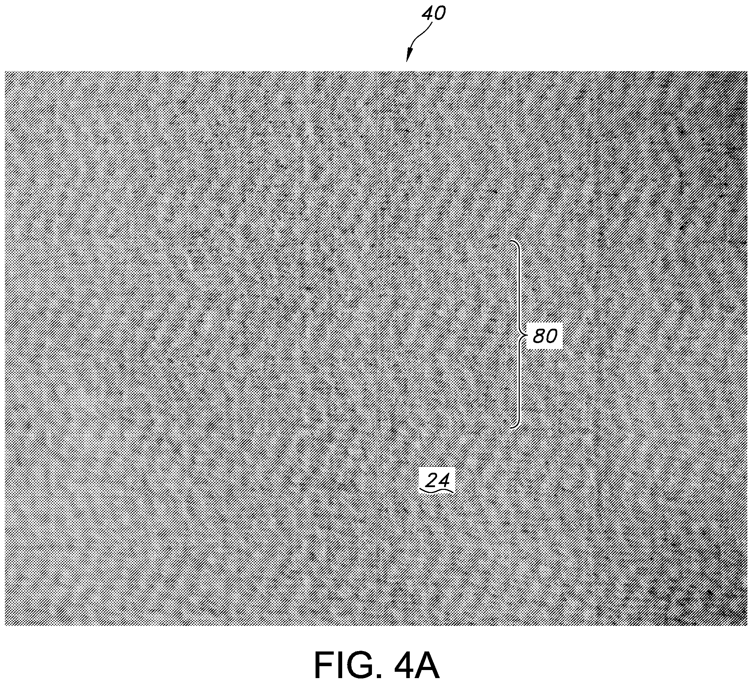

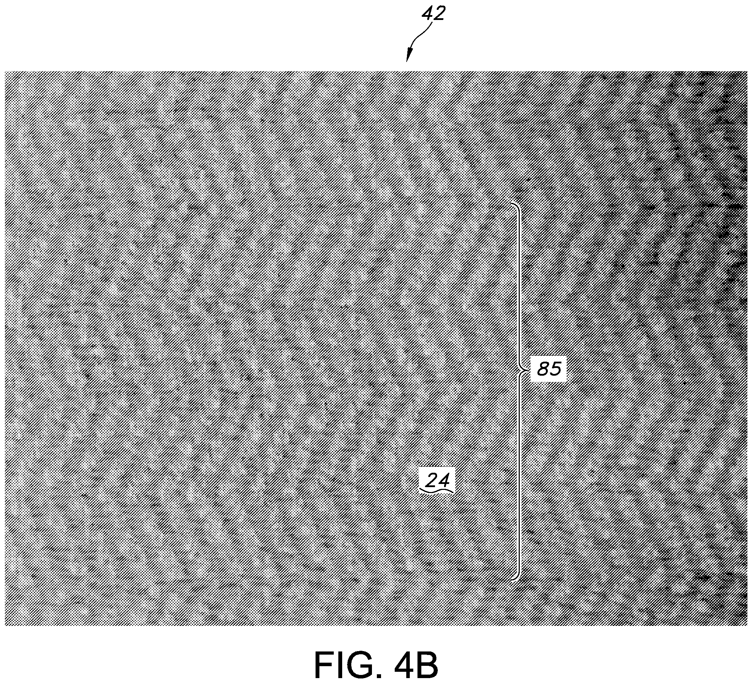

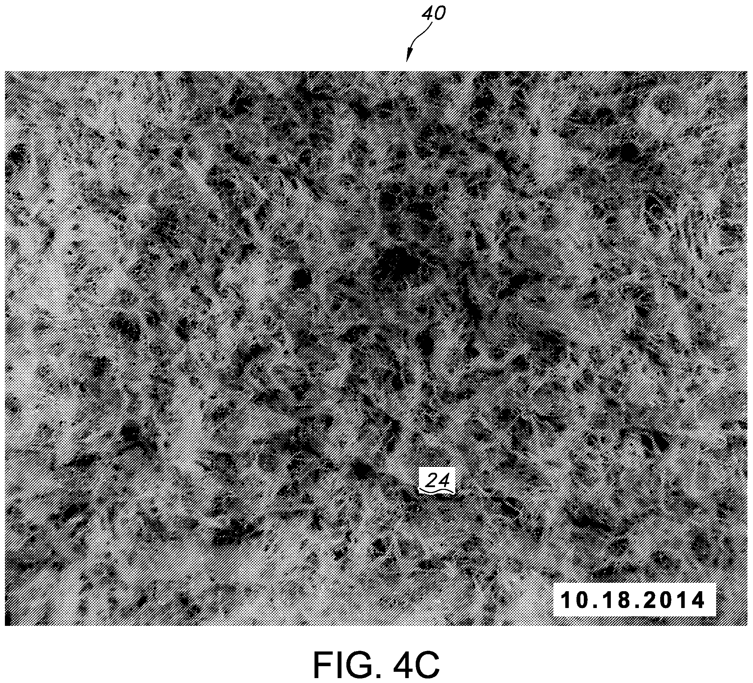

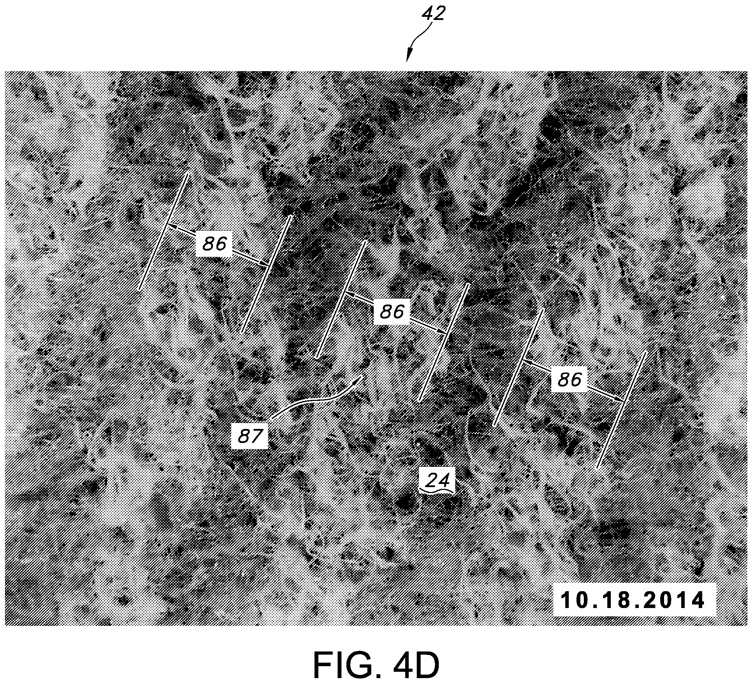

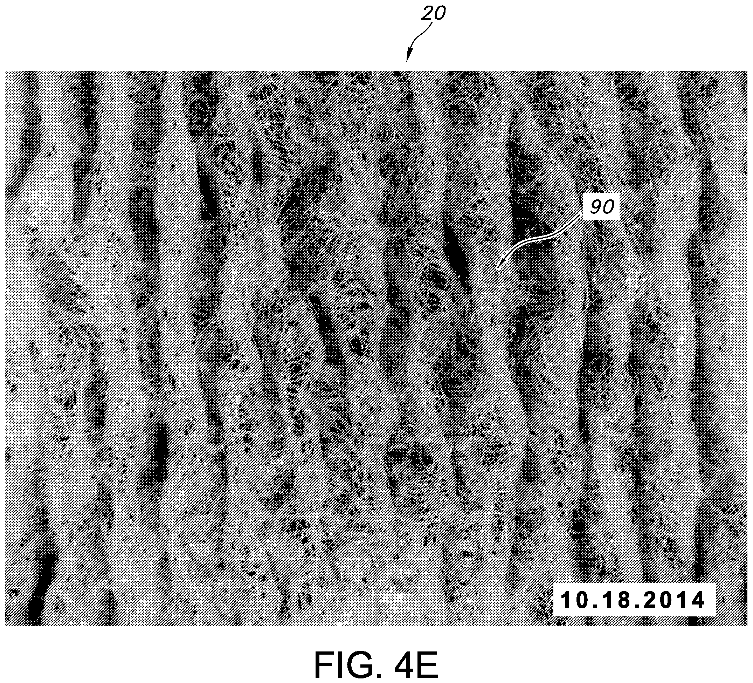

Figure 4 illustrates a top plan view of an alternative embodiment of a film aperture pattern which may be used in the machine-direction, elastic apertured film-based, stretch-bonded laminate layer 20, in which the film aperture pattern is in a zig-zag configuration.
Figure 4A is a photograph of a machine-direction, elastic apertured film-based, stretch-bonded composite 24 made from a machine-direction, elastic apertured film-based, stretch-bonded laminate layer 20 (of itself three layers), viewed from the pulp side 40, with the aperture pattern being in a zig-zag configuration.
Figure 4B is a photograph of the machine-direction, elastic apertured film-based, stretch-bonded composite 24 of Figure 4A, made from a machine-direction, elastic apertured film-based, stretch- bonded laminate layer 20 (of itself three layers), viewed from the wire side 42.
Figure 4C is a higher magnification (3.5X) photograph of the machine-direction, elastic apertured film-based, stretch- bonded composite 24, made from a machine-direction, elastic apertured film-based, stretch-bonded laminate layer 20 (of itself three layers), viewed from the pulp side 40, shown in Figure 4A.
Figure 4D is a higher magnification (3.5X) photograph of the machine-direction, elastic apertured film-based, stretch- bonded composite 24, made from a machine-direction, elastic apertured film-based, stretch-bonded laminate layer 20 (of itself three layers), viewed from the wire side 42, shown in Figure 4B.
Figure 4E is a magnified photograph (3.5X) of the surface of only the machine direction, elastic apertured film-based, stretch bonded laminate layer 20 of Figures 4A-4D, without any hydroentangled hydrophilic layer attached thereto.

Repeat use of reference characters in the present specification and drawings is intended to represent same or analogous features or elements of the invention.

### DEFINITIONS

As used herein the term "nonwoven fabric or web" refers to a web having a structure of individual fibers or threads which are interlaid, but not in an identifiable manner as in a knitted fabric. Nonwoven fabrics or webs have been formed from many processes such as for example, meltblowing processes, spunbonding processes, bonded carded web processes, etc.

As used herein, the term "meltblown web" generally refers to a nonwoven web that is formed by a process in which a molten thermoplastic material is extruded through a plurality of fine, usually circular, die capillaries as molten fibers into converging high velocity gas (e.g. air) streams that attenuate the fibers of molten thermoplastic material to reduce their diameter, which may be to microfiber diameter. Thereafter, the meltblown fibers are carried by the high velocity gas stream and are deposited on a collecting surface to form a web of randomly dispersed meltblown fibers. Such a process is disclosed, for example, in U.S. Pat. No. 3,849,241 to Butin, et al. Generally speaking, meltblown fibers may be microfibers that are substantially continuous or discontinuous, generally smaller than 10 microns in diameter, and generally tacky when deposited onto a collecting surface.

As used herein, the term "spunbond web" generally refers to a web containing small diameter substantially continuous fibers. The fibers are formed by extruding a molten thermoplastic material from a plurality of fine, usually circular, capillaries of a spinnerette with the diameter of the extruded fibers then being rapidly reduced as by, for example, eductive drawing and/or other well-known spunbonding mechanisms. The production of spunbond webs is described and illustrated, for example, in U.S. Pat. Nos. 3,692,618 to Dorschner, et al., 3,802,817 to Matsuki, et al., 3,338,992 to Kinney, 3,341,394 to Kinney, 3,502,763 to Hartman, 3,502,538 to Levy, 3,542,615 to Dobo, et al., 4,340,563 to Appel, et al. and 5,382,400 to Pike, et al. Spunbond fibers are generally not tacky when they are deposited onto a collecting surface. Spunbond fibers may sometimes have diameters less than about 40 microns, and are often between about 5 to about 20 microns.

As used herein the term "staple fiber" means fibers that have a fiber length generally in the range of about 0.5 to about 150 millimeters. Staple fibers may be cellulosic fibers or non-cellulosic fibers. Some examples of suitable non-cellulosic fibers that can be used include, but are not limited to, hydrophilically-treated polyolefin fibers, polyester fibers, nylon fibers, polyvinyl acetate fibers, and mixtures thereof. Hydrophilic treatments can include durable surface treatments and treatments in polymer resins/blends. Cellulosic staple fibers include for example, pulp, thermomechanical pulp, synthetic cellulosic fibers, modified cellulosic fibers, and the like. Cellulosic fibers may be obtained from secondary or recycled sources. Some examples of suitable cellulosic fiber sources include virgin wood fibers, such as thermomechanical, bleached and unbleached softwood and hardwood pulps. Secondary or recycled cellulosic fibers may be obtained from office waste, newsprint, brown paper stock, and paperboard scrap. Further, vegetable fibers, such as abaca, flax, milkweed, cotton, modified cotton, cotton linters, can also be used as the cellulosic fibers. In addition, synthetic cellulosic fibers such as, for example, rayon, viscose rayon and lyocell may be used. Modified cellulosic fibers are generally composed of derivatives of cellulose formed by substitution of appropriate radicals (e.g., carboxyl, alkyl, acetate, nitrate, etc.) for hydroxyl groups along the carbon chain. Desirable staple fibers for the purposes of this application, are hydrophilic, such as traditional cellulosic fibers (a desirable example of which is pulp fibers) Further,)pre-treatments can be added to staple fibers, such as debonders or wetting aids, to control dispersion in process and/or affect finish property attributes such as stiffness and hand-feel.

As used herein, the term "substantially continuous fibers" is intended to mean fibers that have a length which is greater than the length of staple fibers. The term is intended to include fibers which are continuous, such as spunbond fibers, and fibers which are not continuous, but have a defined length greater than about 150 millimeters.

As used herein "bonded carded webs" or "BCW" refers to nonwoven webs formed by carding processes as are known to those skilled in the art and further described, for example, in U.S. Pat. No. 4,488,928 to Ali Khan et al. Briefly, carding processes involve starting with a blend of, for example, staple fibers with bonding fibers or other bonding components in a bulky ball that is combed or otherwise treated to provide a generally uniform basis weight. This web is heated or otherwise treated to activate the adhesive component resulting in an integrated, usually lofty nonwoven material.

The basis weight of nonwoven webs is usually expressed in ounces of material per square yard (osy) or grams per square meter (gsm) and fiber diameters are usually expressed in microns, or in the case of staple fibers, denier. It is noted that to convert from osy to gsm, multiply osy by 33.91.

As used herein the terms "machine direction" or "MD" generally refers to the direction in which a material is produced. It is also often the direction of travel of the forming surface onto which fibers are deposited during formation of a non-woven web. The term "cross-machine direction" or "CD" refers to the direction perpendicular to the machine direction. Dimensions measured in the cross-machine direction (CD) are referred to as "width" dimensions, while dimensions measured in the machine direction (MD) are referred to as "length" dimensions. The width and length dimensions of a planar sheet make up the X and Y directions of the sheet. The dimension in the depth direction of a planar sheet is also referred to as the Z-direction.

As used herein, the terms "elastomeric" and "elastic" are used interchangeably and shall mean a layer, material, laminate or composite that is generally capable of recovering its shape after deformation when the deforming force is removed. Specifically, when used herein, "elastic" or "elastomeric" is meant to be that property of any material which, upon application of a biasing force, permits the material to be stretchable to a stretched biased length which is at least about fifty (50) percent greater than its relaxed unbiased length, and that will cause the material to recover at least forty (40) percent of its elongation upon release of the stretching force. A hypothetical example which would satisfy this definition of an elastomeric material would be a one (1) inch (2.54cm) sample of a material which is elongatable to at least 1.50 inches (3.81cm) and which, upon being elongated to 1.50 inches (3.81cm) and released, will recover to a length of less than 1.30 inches (3.30cm). Many elastic materials may be stretched by much more than fifty (50) percent of their relaxed length, and many of these will recover to substantially their original relaxed length upon release of the stretching force. A material that is incapable of recovering its shape after deformation when a deforming force is removed is considered inelastic.

Material may be tested for its elastic properties using a cyclical testing procedure. In particular, 2-cycle testing may be employed to 100 % defined elongation. For this test, the sample size may be 3 inches (7.6 centimeters) in the cross-machine direction by 6 inches (15.2 centimeters) in the machine direction. The grip size may be 3 inches (7.6 centimeters) in width. The grip separation may be 4 inches (10.2 centimeters). The samples may be loaded so that the machine direction of the sample is in the vertical direction. A preload of approximately 20 to 30 grams may be employed. The test may pull the sample to 100 % elongation at a speed of 20 inches (50.8 centimeters) per minute and then immediately (without pause) return the sample to 0 % elongation at a speed of 20 inches (50.8 centimeters) per minute. The results of test data are desirably from the first and second cycles. The testing may be performed on a Sintech Corp. Constant rate of extension tester 2/S with a Renew MTS mongoose box (control) using TESTWORKS 4.07b software (Sintech Corp., of Cary, NC) and conducted under ambient conditions.

As used herein, the terms "fluid entangling" and "fluid-entangled" generally refer to a formation process for creating a degree of fiber entanglement within a given fibrous nonwoven web or between fibrous nonwoven webs and other materials so as to make the separation of the individual fibers and/or the layers more difficult as a result of the entanglement. Generally, this is accomplished by supporting the web or other material on some type of forming or carrier surface, such as a forming wire, which has at least some degree of permeability to the impinging pressurized fluid. A pressurized fluid stream (usually multiple streams at a manifold or series of manifolds) is then directed against the surface of the web and/or other materials which is opposite the supported surface of the web and/or other materials. The supported surface of a web and/or other material is also known as the wire side, and the unsupported surface of a web and/or other material is also known as the pulp side. The pressurized fluid contacts the fibers of the web and forces portions of the fibers in the direction of the fluid flow, thus displacing all or a portion of a plurality of the fibers towards the supported surface (wire side) of the web. The result is a further entanglement of the fibers in what can be termed the Z-direction of the web (its depth direction or thickness). When two or more separate webs or other layers are placed adjacent one another on the forming/carrier surface and subjected to the pressurized fluid, the generally desired result is that some of the fibers of at least one of the webs are forced into the adjacent web or layer, thereby causing fiber entanglement between the interfaces of the two surfaces so as to result in the bonding or joining of the webs/layers together due to the increased entanglement of the fibers. The degree of bonding or entanglement will depend on a number of factors including, but not limited to, the types of fibers being used, their fiber lengths, the degree of pre-bonding or entanglement of the web or webs prior to subjection to the fluid entangling process, the type of fluid being used (liquids, such as water, steam or gases, such as air), the pressure of the fluid, the number of fluid streams, the speed of the process, the dwell time of the fluid and the porosity of the web or webs/other layers and the forming/carrier surface (such as a forming wire). One of the most common fluid entangling processes is referred to as hydroentangling, which is a well-known process to those of ordinary skill in the art of nonwoven webs. Examples of fluid entangling processes can be found in U.S. Pat. Nos. 3,485,706 to Evans, and U.S. Pat. Nos. 4,939,016, 4,959,531 and 4,970,104 to Radwanski. A typical hydroentangling process utilizes high pressure jet streams of water to entangle staple fibers and/or substantially continuous fibers to form a highly entangled consolidated fibrous structure. Hydroentangled nonwoven fabrics of staple length fibers and substantially continuous fibers are disclosed for example in U.S. Pat. No. 3,494,821 to Evans and 4,144,370 to Boulton. Further examples of hydroentangled composite nonwoven fabrics of a continuous filament nonwoven web and a pulp layer are disclosed, for example in U.S. Pat. No. 5,284,703 to Everhart et al., and 6,315,864 to Anderson. The hydroentangling manufacturing conditions described in such references are representative of operating conditions that are acceptable for use in manufacturing hydroentangled sheets in accordance with the invention, unless otherwise noted. For the purposes of this application the abbreviation "HET'd" shall be a shorthand notation for hydroentangled.

As used herein, the term "g/cc" generally refers to grams per cubic centimeter.

As used herein, the term "hydrophilic" generally refers to fibers or films, or the surfaces of fibers or films which are wettable by aqueous liquids in contact with the fibers. The term "hydrophobic" includes those materials that are not hydrophilic as defined. The phrase "naturally hydrophobic" refers to those materials that are hydrophobic in their chemical composition state without additives or treatments affecting the hydrophobicity.

The degree of wetting of the materials can, in turn, be described in terms of the contact angles and the surface tensions of the liquids and materials involved. Equipment and techniques suitable for measuring the wettability of particular fiber materials or blends of fiber materials can be provided by the Cahn SFA-222 Surface Force Analyzer System, or a substantially equivalent system. When measured with this system, fibers having contact angles less than 90 are designated "wettable" or hydrophilic, and fibers having contact angles greater than 90 are designated "nonwettable" or hydrophobic.

As used herein, the term "personal care product" refers to diapers, training pants, absorbent underpants, adult incontinence products, sanitary wipes and feminine hygiene products, such as sanitary napkins, pads, and liners, and the like. The term "absorbent medical product" is employed to refer to products such as medical bandages, tampons intended for medical, dental, surgical, and/or nasal use, surgical drapes and garments, coverings in medical settings, and the like.

The term "composite" as used herein, refers to a machine-direction, stretch-bonded elastic laminate material which laminate layers have been hydroentangled with an aqueous liquid absorbent or hydrophilic fibrous layer. The machine-direction, stretch-bonded elastic laminate material is itself a multi-component material or a multilayer material including at least one machine-direction, elastic layer and at least one inelastic layer that have been bonded together while the elastic layer is in a machine-direction, stretched condition. For example, a multilayer material may have at least one machine-direction elastic layer joined to at least one gatherable inelastic layer at least at two locations so that the gatherable layer is gathered between the locations where it is joined to the elastic layer. Such a multilayer elastic material may be stretched in the machine direction to the extent that the inelastic material (which had been gathered between the bond locations when in a contracted form) allows the elastic material to elongate in the machine-direction. The multilayer elastic material is desirably a machine-direction, stretch-bonded, apertured film-based laminate. The inelastic layer which forms the gathers may be of a wide variety of nonwoven materials, such as for example spunbond, meltblown, BCW, laminates of such, or a combination of two or more of such materials. Such elastic apertured film may be of a single layer or multilayer construction, such as a film having an elastic core layer with one or more thermoplastic skin layers adjacent the elastic core layer.

As used herein, the term "strain-at-intercept" shall also be referred to as "maximum non-destructive elongation". It is essentially the measurement taken at a point (or narrow range) where the minimum elastic load slope of the elastic stretch-bonded laminate/composite intercepts the maximum facing slope (such as of the spunbond facing) It is essentially where they begin to intersect. It is the point or narrow range of strain values resulting in the general flattening of the inelastic facing gathers (the reduction of the gathers) upon stretching the stretch-bonded elastic laminate. At this point or narrow range, the facing has essentially lost or substantially lost its ripple-like gathers, but has not ruptured or separated from the elastic layer of the laminate. The point or narrow range is found on a graph of load (gf) vs extension (mm).

Reference now will be made in detail to various embodiments of the invention, one or more examples of which are set forth below. Each example is provided by way of explanation, not limitation of the invention. For instance, features illustrated or described as part of one embodiment, may be used on another embodiment to yield a still further embodiment.

Generally speaking, an elastic stretch-bonded nonwoven composite includes an elastic stretch-bonded component and an absorbent component (including hydrophilic fibrous materials) which elastic stretch-bonded component has been hydroentangled throughout its structure with the absorbent component, without significantly sacrificing the elastic stretch and recovery attributes of the elastic stretch-bonded component. The elastic stretch-bonded nonwoven composite is formed in one embodiment, from a previously manufactured (or pre-made), elastic stretch-bonded nonwoven laminate layer (desirably of a machine-direction, elastic layer and at least one inelastic layer, these layers also known as laminate sub-layers) of hydrophobic materials, which laminate layer has been hydroentangled in total with a hydrophilic layer, thereby placing aqueous liquid absorbent/hydrophilic materials from the hydrophilic layer throughout each of the various sub-layers of the elastic stretch-bonded nonwoven laminate layer. By re-stretching (prior to hydroentanglement) the previously manufactured elastic stretch-bonded laminate layer to the point that the one or more inelastic facing layers on the laminate are extended so that they flatten and gathers are essentially removed or eliminated, or substantially removed, but not so far that the inelastic facing layers rupture, the elastic stretch-bonded laminate can be hydroentangled with a hydrophilic layer uniformly so as to create an elastic and absorbent material, that is absorbent on both outwardly facing planar surfaces to both aqueous and oil-based liquids. The hydrophilic, desirably cellulosic materials in the composite, absorb aqueous liquids, while the hydrophobic polymeric materials in the composite retain oil-based liquids. The composite demonstrates significant integrity without the necessity for adhesive or large amounts of adhesive, or other further bonding mechanisms in order to bond the layers together. The composite demonstrates at least machine-direction elasticity and reflects the machine-direction elasticity of the elastic stretch-bonded laminate layer component.

As can be seen in Figure 1, a method 10 of producing the hydroentangled elastic stretch-bonded composite of the invention is illustrated. It is desirable in a first embodiment, that a previously manufactured (pre-made), machine-direction, elastic stretch-bonded laminate layer 20 is unrolled while in a gathered state, from an unwind roll 11 and fed into the inventive process. It is also alternatively contemplated for the elastic stretch-bonded laminate layer to be produced in-line just prior to passing it through the inventive process, rather than being unwound from a storage or unwind roll 11 as shown. In such an alternative embodiment (not shown), the in-line produced laminate may not be gathered prior to passing into the inventive process, but could remain in an ungathered, stretched state following its initial manufacture.

In the illustrated embodiment of Figure 1, such pre-made, machine-direction, elastic stretch-bonded laminate layer 20 is a machine-direction, elastic apertured film-based, stretch-bonded laminate layer, such as those laminates described in U.S. Pat. No. 7,803,244. Such elastic apertured film-based, stretch-bonded laminate may include an inelastic layer on either one or both sides of the elastic apertured film layer. For a machine-direction, elastic apertured film-based, stretch-bonded laminate the apertures may in one embodiment be positioned primarily along the machine-direction, alternatively primarily along the cross-machine direction, or in a further alternative embodiment, a combination of machine and cross-machine directions as shown in Figure 1D. It is desirable in one embodiment for the apertures 31 in the elastic film, to include a primary axis which is longer than a secondary axis, such that the primary axis is positioned substantially along the cross-machine direction of the film. Such an aperture shape may be exemplified by an oval or oblong configuration as seen in Figure 1D at 31A and Figure 4 at 31. In this situation, when the material is then re-stretched in the inventive process (if from a gathered configuration) along the machine-direction, the aperture openings 31A, 31 open up further to allow the pass-through of hydroentangled fibers, as will later be described. It should be understood that the spaces 82 between the apertures 31 comprises the film sheet.

As representationally shown in Figure 1, such pre-made and unwound stretch-bonded, elastic laminate layer 20 is in a gathered configuration as unwound from the roll 11. Illustrations of the types of surface ripple-like, gathering features contemplated may be seen in the SEM photomicrographs of Figures 2A and 3A at 51 and in Figure 4E at 90. The gathered elastic stretch-bonded laminate is then directed to at least one series of S-wrap rolls in order to re-stretch the machine-direction, elastic laminate to the point that the one or more inelastic facing layers of the elastic laminate are extended to a relatively flat condition, and the gathers are significantly reduced or eliminated, but not to the point where the inelastic layer(s) starts to rupture or fibers start to separate from the inelastic layer(s). It should again be recognized, that while not shown in the figure, should a stretch-bonded laminate be produced in-line as opposed to from a previous and removed operation (pre-made), the laminate alternatively maynot need to be passed to an initial S-wrap roll arrangementor nip point and not need to be re-stretched, it having instead been maintained in a stretched configuration prior to hydroentangling.

The strain at intercept point (narrow range) is achieved desirably by re-stretching the previously gathered elastic laminate layer in the machine direction, between a first set of two S- wrap rolls having a ratio of speeds, with the second of the two S- wrap rolls 15 rotating faster than the first roll 13. Such machine-direction re-stretching of the previously gathered, stretch-bonded laminate may also be accomplished by creating a speed differential between the first set of two S-wrap rolls shown (13,15) and a later appearing foraminous web carrier surface 41 (which is to be run through a hydroentangling manifold), or still alternatively, between the first set of S-wrap rolls (13,15) and a second set of S-wrap rolls (23, 25) which are placed following the foraminous web carrier surface along the machine direction. In either event, it is important for a previously gathered stretch-bonded laminate 20 to be re-stretched in the machine direction and to remain taut (in a stretched condition) throughout the hydroentanglement step with a hydrophilic fiber layer. In a first embodiment, the two rolls of the S-wrap roll arrangement have a ratio of speeds (second roll to first roll) of between about 1.1:1 and 5:1, alternatively between about 1.5:1 and 3:1, with the second of the two S-wrap rolls 15, rotating faster than the first roll 13 (or the wire 41 traveling faster than the roll 15).

After exiting the first illustrated S-wrap roll arrangement (13,15), the now, ungathered and taut, machine-direction elastic stretch-bonded laminate layer 20 is fed to a position where it is met with a hydrophilic/absorbent fiber web 22, which is unwound from a supply roll 17. While a pre-made hydrophilic/ "aqueous liquid absorbent" fiber web 22 is shown in the figure, it should be appreciated that the fiber web 22 may either be pre-made or in-line produced, or may vary in its degree of hydrophilicity. For example, the fiber web may be produced off-line or in-line using a wetlaid, dry-laid or carded process as is known in the art. Such fiber web 22 may be of a single layer or of multiple layers, and may include cellulosic or other hydrophilic fibers of the types previously described. Desirably such web includes pulp fibers. It is desirable in one embodiment, for the hydrophilic web to have a basis weight of between about 1 gsm and 200 gsm, alternatively, between about 2 and 100 gsm, alternatively between about 10 gsm and 50 gsm. Desirably in one embodiment, the inelastic facing layers (sub-layers) of the elastic stretch-bonded laminate layer 20 each have a basis weight of between about 3 gsm and 100 gsm, alternatively between about 5 gsm and 50 gsm. In one embodiment, the inelastic facing layers are desirably spunbond webs, such as polypropylene spunbond webs, which are themselves bonded using traditional bond patterns as are known in the art. Alternatively, such inelastic layers may be hydrophobic coform webs or separately produced, hydrophobic hydroentangled webs.

At the point of meeting with the hydrophilic/"aqueous liquid absorbent" fiber web 22, the ungathered, machine-direction, elastic stretch-bonded laminate layer 20 (the elastic apertured film-based laminate) is running at the same machine-direction speed as the hydrophilic fiber web 22, both of which are fed into a hydroentangling manifold 19 via the moving foraminous web carrier surface 41. The hydrophilic fiber web may encompass any number of web materials, such as for example staple fibers, substantially continuous fibers, and combinations of staple fiber and/or substantially continuous fiber webs having a varying degree of hydrophilicity/hydrophobicity as previously described. For example, in one embodiment, the hydrophilic fiber web could be wood fibers that have been blended with staple fibers like PET, PP, PE, Rayon and others.

Essentially, the hydrophilic fiber layer 22 (such as a pulp fiber layer) is laid on the ungathered machine-direction, elastic stretch-bonded laminate 20, which rests upon the foraminous web carrier surface 41 of a conventional hydraulic entangling machine. It is desirable that the hydrophilic layer 22 be between the ungathered machine-direction, elastic stretch-bonded laminate 20 and the hydraulic entangling manifold(s)19. The hydrophilic layer 22 and ungathered machine-direction, elastic stretch-bonded laminate 20 pass under one or more hydraulic entangling manifolds 19 (although one is representationally shown) and are treated with jets of fluid 21 to entangle the pulp or other hydrophilic fibers of the web 22 with the layers of the adjacent, ungathered machine-direction, elastic stretch-bonded laminate 20. The jets of fluid also drive the hydrophilic fibers into and through the layers of the ungathered machine-direction, elastic stretch-bonded laminate 20, such as through the open apertures in the re-stretched film layer. The hydroentangling may take place while the hydrophilic layer 22 is highly saturated with water (wet-laid), or alternatively, while the hydrophilic layer 22 is a dry air-laid or dry-laid layer of fibers.

The hydroentangling (hydraulically entangled) may be accomplished utilizing conventional hydroentangling equipment such as may be found, for example, in U.S. Pat. No. 3,485,706 to Evans. The hydroentangling of the present invention may be carried out with any appropriate working fluid such as, for example, water. The working fluid flows through at least one manifold which evenly distributes the fluid to a series of individual holes or orifices. These holes or orifices may be from about 0.003 to about 0.015 inch (about 0.0762mm to about 0.381mm) in diameter. A single manifold may be used or several manifolds may be arranged in succession. In the hydroentangling process, the working fluid passes through the orifices at pressures ranging from about 200 to about 5000 pounds per square inch (psi) (about 1.4MPa to about 34.5MPa), alternatively between about 200 to about 2900 psi (about 1.4MPa to about 20MPa), alternatively between 1400 to about 2900 psi (9.6MPA to about 20MPa), further alternatively between about 200 and 2000 psi (about 1.4MPa and 13.8MPa).

For the hydroentangling of hydrophilic fibers into an ungathered, machine-direction, elastic stretch-bonded laminate based on an apertured film-based elastic layer, it is important to utilize pressures that would not unduly rupture the film much beyond the originally present apertures in the film. Higher pressures would be used for entangling more dense materials, but pressures should be monitored so as to avoid undue rupturing. At the upper ranges of the described pressures, it is contemplated that the composite fabrics may be processed at speeds of about 1000 feet per minute (fpm) (305m/min). The fluid is ejected from injectors/jet strips that are positioned typically from between about 0.25 and 2 inch (about 6.35mm and 50.8mm), alternatively between about 0.5 to 1 inch (about 1.27cm to 2.54cm) above the hydrophilic web. The fluid impacts the hydrophilic layer 22 and the ungathered machine-direction, elastic stretch-bonded laminate 20, which are supported by the foraminous web carrier surface 41. The foraminous web carrier surface may be for example, a single plane wire mesh having a mesh size of from about 40 X 40 to about 100 X 100. The foraminous surface may also be a multi-ply mesh having a mesh size from about 50 X 50 to about 200 X 200. As is typical in many water jet treatment processes, vacuum slots 29 may be located directly beneath the hydroentangling manifolds or beneath the foraminous web carrier surface 41, or somewhat downstream (to the right in the machine direction of Figure 1) such that excess water is withdrawn from the hydroentangled composite 24. After the fluid jet treatment, the composite fabric 24 is desirably transported to a non-compressive drying operation 60, such as a through-air dryer, in which the entangled composite is dried at temperatures up to the maximum non-destructive temperatures allowed by the materials chosen. Such drying operation 60 may be positioned either before or after the second set of S-wrap rolls (23, 25). The second set of S-wrap rolls are for allowing such composite 24 to re-gather 26 prior to winding for final storage on a roll 27, or prior to the composite being passed along for further processing. The second set of S-wrap rolls (23, 25) slows the composite traveling speed down such that it can re-gather along the machine-direction. It should be recognized that while each of the S-wrap roll configurations are shown as pairs, multiple rolls may be utilized, such as a series of 3 or 4 rolls or other types of stretching/gathering apparatus.

While not shown, it may be desirable to use finishing steps and/or post treatment processes to impart selected properties to the hydroentangled composite 26. For example chemical post treatments may be added to the composite at a later step, or the composite may be transported to cutters, slitters or other processing equipment for converting the composite into a final product, such as wipes, components of personal care absorbent articles, or medical garment or covering fabrics. Further, patterning may be placed through known processes into the hydroentangled outer surfaces of the composite material 24. Examples of wipe-type products may be found in U.S. Pat. Nos. 7,194,788 to Clark et al., and U.S. Publication No. 2011/0119850 to Mallory et al.

The machine-direction, elastic stretch-bonded laminate layer 20 has a pulp-facing side 40 (or side that is facing the hydrophilic web 22), and a wire-facing side 42 (that is a side which is facing the foraminous web carrier surface (most commonly a forming wire)). As the combined webs pass through the hydroentanglement manifold, the fibers of the hydrophilic web 22 are mingled with the one or more inelastic facing layers and elastic layer(s) of the stretch-bonded laminate, such that the layers are bonded together via the entangled fibers, to create an elastic stretch-bonded composite 24. It should however be recognized that the inelastic facing layers may be of a meltblown, spunbond, BCW, nonwoven laminate or combination of the aforementioned layers. The hydrophilic fibers of the web 22 are forced through the inelastic facing layer(s) and elastic layer(s) (in the case of the apertured film, through the film apertures), such that they are present on both sides (and facing layer outer surfaces) of the composite 24. Such entangled fibers act to create a web with high levels of integrity, thereby reducing the need for bonding adhesive between the various layers of the composite 24. Such entangled fibers also act to provide water absorbency throughout each sub-layer of the elastic composite.

A cross-machine direction, cross-sectional view of the hydrophilic/"aqueous liquid absorbent" fiber web 22 is illustrated in Figure 1A. A representation of individual hydrophilic fibers 22A can be seen across the web layer and along the web depth direction Z. As seen in Figure 1B, a cross-machine direction, cross-sectional view of the ungathered elastic laminate 20 is illustrated. The ungathered elastic laminate is a machine-direction, elastic apertured film-based, stretch-bonded laminate. The laminate has three sub-layers along the depth direction Z, including an elastic layer of film 30 having apertures 31, sandwiched between two inelastic nonwoven facing layers 32, 34. Once the hydrophilic fiber layer 22 has been hydroentangled with the apertured, film-based, elastic stretched-bonded laminate, the absorbent and elastic stretch-bonded composite 24 is formed. As seen in the representational Figure 1C, the previously described elastic laminate 20 now includes hydrophilic fibers 22A that have been entangled throughout the Z direction in the various layers. The now modified elastic laminate 20A, includes hydrophilic fibers 22A in the first inelastic facing layer 32A, in the film apertures 31 of the modified elastic layer 30A, and also in the second inelastic facing layer 34A. The pulp side 40 of the composite and wire side 42 of the composite are also shown.

Figures 1 and 1C illustrate an embodiment in which a hydrophilic web is hydroentangled to a stretch-bonded laminate from one side of the stretch-bonded laminate. It should be appreciated however, that following such operation, a second hydrophilic web may be hydroentangled to the stretch-bonded laminate from the other side of the stretch-bonded laminate composite, such that the stretch-bonded laminate undergoes two hydroentangling steps, one from each opposite web direction. Such second hydrophilic web may be the same composition type of web as the first one to be hydroentangled, or alternatively, of a different composition. If such hydrophilic layers are hydroentangled from both sides of the elastic laminate, the resulting composite would have significantly more hydrophilic fibers throughout its overall structure, thereby further improving absorbency for aqueous-based liquids.

Photomicrograph images of the hydroentangled elastic stretch-bonded nonwoven composite were prepared using scanning electron microscopy (SEM). Images of the two surfaces of the produced material (the pulp side and the wire side) were produced by SEM, after gold coating the samples to mitigate charging. As seen in the photomicrographs of Figures 2A-3B, an apertured film-based stretch-bonded, machine-direction elastic laminate was used as the starting (pre-made) elastic layer for the overall composite. The photomicrographs are taken at 2 mm and 500 micron scale magnification respectively. The machine-direction, apertured film-based stretch-bonded, elastic laminate was produced in accordance with the method described in 7,803,244 noted herein with the aperture pattern illustrated in Figure 1D. The apertured elastic film layer was produced from a blend of elastomeric copolymers of polyethylene available from Dow Chemical Company of Midland, Michigan under the designation INFUSE and included a propylene-based elastomer under the designation VISTAMAXX from ExxonMobil Chemical Co. of Houston, Texas. The film was laminated between two polypropylene-based inelastic spunbond nonwoven facing layers and was gathered prior to being re-stretched along the machine direction during the inventive hydroentanglement process. The spunbond facing layers were specifically blue, 12 gsm polypropylene facing layers. The pulp fibers of a cellulosic-based sheet were successfully entangled through all layers (through the apertures in the film layer) to both sides of the stretch-bonded laminate layer, thereby forming the absorbent composite. Figure 2A illustrates the pulp side 40 of the machine-direction, stretch-bonded, elastic composite in which the tissue sheet of the hard roll towel has been hydroentangled to the elastic laminate layer. The hydrophilic pulp fibers have been entangled through the spunbond fibers 50. The gathered topography is evident in ripple-like gathers 51 once the composite had been allowed to retract following hydroentanglement. As can be seen from the pulp side 40 enlargement image of Figure 2B, the characteristically flat pulp fibers 51 are evident in the image, and can be distinguished from the characteristically elongated and cylindrically shaped hydrophobic spunbond fibers 50 of the inelastic facing layer. While a preponderance of pulp fibers is present on the initial contact side of the elastic laminate sheet, individual pulp fibers can be clearly seen on the opposing wire side of the elastic laminate sheet. For example, as seen in Figure 3A, which shows the wire side 42 of the elastic composite after hydroentanglement, the ripple-like gathers 51 are evident in the retracted composite. The spunbond fibers 50 are also evident. In the enlarged image of Figure 3B, flat pulp fibers 52 are evident on the wire side, in addition to the cylindrical spunbond fibers 50 of the facing layer.

The resulting laminate demonstrated excellent stretch and recovery characteristics. The film-based, stretch-bonded laminate was stretched to approximately its strain at intercept point, or the point or narrow range at which the spunbond facing gathers were pulled out of the structure, that is flattened, but not beyond this point, prior to hydroentangling. Essentially, the spunbond facing layers were not pulled to the point that they were ruptured, but the gathered surface essentially changed to a more regular planar surface without facing layer surface ripples. This was accomplished by varying the second S-wrap roll speed in relation to the first roll. The S-wrap roll speeds between the first roll of the second set of rolls, and the second roll of the first set of rolls were maintained, so as to keep the composite taut during hydroentangling. SCOTT Hard Roll Towels (HRT) available from Kimberly-Clark were unwound onto the stretched film-based stretch-bonded laminate and the two layers were passed under hydroentangling manifolds as previously described. The then entangled structure was subsequently allowed to retract fully before passing through a through-air dryer (TAD) to dry and wind the elastic laminate composite (including the now attached pulp sheet). The resulting material demonstrated high loft, similar to the original film-based stretch-bonded laminate without pulp sheet, high extensibility and retraction similar to the film-based stretch-bonded laminate, as well as good durability. By good durability is meant that no visible tearing or dislodging of the pulp upon stretching up to approximately the strain at intercept was observed.

This is indicative that even in a stretch-bonded laminate in which the elastic layer is comprised of an apertured film, the pulp fibers were successful in penetrating the apertures of the elastic layer to the wire side of the sheet.

### Examples of Materials Made In Accordance with the Invention

### Examples

An apertured film-based, stretch-bonded laminate (available from Kimberly-Clark) was initially produced in accordance with the method described in the heretofore mentioned U.S. Pat. No. 7,803,244 to Siqueira et al. The apertured film-based laminate consisted of a middle layer of apertured elastic film as previously noted, bonded on both sides to a spunbond layer as previously noted. The pre-made film-based, stretch-bonded laminate was unwound from its gathered state. A SCOTT Hard Roll Towel (HRT), available from Kimberly-Clark was unwound onto the pre-made, stretched film-based, stretch-bonded laminate and the two layers were passed through the hydroentangling manifolds. The unwind speed was approximately 30 feet per minute (fpm) (9.1 m/min) and the draw speed was approximately 100 fpm (30.5m/min). The entangled structure was then allowed to retract fully before passing through a through-air dryer (TAD) to dry and wind the elastic composite produced. The TAD temperature was between about 75 and 90 degrees F (about 24°C and 32°C) and the running speed through the TAD was about 45 fpm (13.7m/min). The resulting composite demonstrated high loft, high extensibility, retraction and durability, in that no visible tearing or dislodging of the pulp upon stretching up to approximately the strain at intercept was observed. The film-based, stretch-bonded laminate has a fairly occlusive structure, owing to the use of an apertured elastic film in the center of the stretch-bonded laminate. However, the stretching of the apertured film-based elastic stretch-bonded laminate resulted in the apertures opening up sufficiently to allow some of the staple fibers from the HRT (pulp) to be entangled through the film aperture openings to both sides of the laminate and into both blue polypropylene 12 gsm spunbond facing sides of the structure. The pre-made, elastic, machine-direction, stretch-bonded laminate was only stretched to approximately the strain at intercept point and not to the point in which the nonwoven facings were separated from the elastic layer.

It was also observed that hydroentangling of the pulp into the stretch-bonded laminate resulted in the stretch-bonded laminate layers being noticeably better bonded together than hydroentangling alone provides. An elastic laminate composite was therefore constructed that was composed of a pre-made, machine direction, stretch-bonded elastic laminate and non-elastic, absorbent staple fibers exhibiting high elasticity and recovery, high loft (thickness), cloth-like features, absorbency to both aqueous and oil-based liquids, and durability between the non-elastic staple fibers, and the pre-made elastic laminate. The composite structure exhibited improved laminate peel strength.

It was also observed that the nonwoven facings would maintain their structural integrity when delaminated from the elastic film layer, where the laminate was exposed to water jets of the hydroentanglement process (but with no pulp present). However, where there was pulp present, the facings would tear rather than delaminate, when delamination was attempted using such water jets to delaminate.

The following test methods were employed on the hydroentangled stretch-bonded laminates, resulting in the data of the following Tables 1-5. Unless otherwise stated, in preparation for the test, the test conditions were employed at ambient room conditions (23 +/- 2 degree C (73.4 +/- 3.6 degree F) and 50 +/- 5 % relative humidity).

### As-Is, Conditioned, and Bone Dry Basis Weight

This test was used to determine the as-is, conditioned, and/or bone dry basis weight for the laminate/composite products. This test was designed using an initial test specimen size of 929.09 square centimeters (144 square inches) consisting of either 16 sheets cut 76.2 by 76.2 mm (3 by 3 inches) or 9 sheets cut 101.6 by 101.6 mm (4 by 4 inches). Basis weight was reported in grams per square meter (g/m2 or gsm). For the purposes of this test, the term "as-is" refers to the material that has not been conditioned (not in controlled environment), with such basis weight values containing an unknown amount of moisture. The term "bone dry" refers to material that has been oven dried for a specific time period (e.g., such as 25 minutes to one hour for specimens weighing less than 10 grams) prior to basis weight measurement being taken. The term "conditioned" refers to material that has been acclimated to room conditions or a specified testing environment for a set period of time so it equilibrates to the environment prior to a basis weight measurement being taken. For "bone dry" basis weight, the noted oven was preheated to 105 +/- 2 degrees C. The samples were allowed to "condition" to the specified testing environment for a minimum of four (4) hours prior to test specimen preparation. All of the specimens were free of folds, crimp lines, or other visual defects.

The "As-is" or "conditioned" basis weights were measured and recorded in grams, with samples not overhanging a balance pan edge during measurement. For bone-dry measurements, a container and lid were used for storing samples in the oven. It was important that the container and lid be weighed together, and remain together throughout the weight test. The specimen(s) were placed in the weighing container, with the lid (separated) and all were placed in the oven, with the container being uncovered. The oven time was monitored once the oven returned to 105 +/- 2 degrees C after placement of the container in the oven. For specimens weighing less than 10 grams, the time in the oven was at least 25 minutes, but preferably longer. For specimens weighing 10 grams or more, the oven time was a minimum of 8 hours. After the specified time in the oven, the ovens were opened and the containers were closed by placing the lids on the respective container (s). The containers were then allowed to cool to approximately room temperature for 10 minutes, or less. The covered container was then weighed (with specimen(s) inside). The weight of the container and lid by themselves was then subtracted from the weight of the previously oven-heated container, lid, and specimen to arrive at the bone dry specimen weight. In order to obtain the basis weight of the material in g/m2, the specimen weight (grams) was multiplied by 10.764 (a factor that is specific to the specimen size used) to obtain g/m2. The oven utilized was a gravity forced-air oven capable of maintaining 105 +/- 3.6 degrees C.

### Vertical Absorbent Capacity

This test was used to determine the absorbent capacity of materials in terms of both the weight of testing fluid that was absorbed by the specimen and as a percentage of its unit weight. This test was designed to determine the amount of either water or mineral oil absorbed. The test method immersed a square specimen in the testing fluid for a specific time period. The specimen was then suspended vertically and allowed to drain. The absorbent capacity, specific capacity, and percent absorption were then calculated. For the purposes of this test, the absorbent capacity or grams/specimen area (g/specimen area) is the amount of testing fluid retained after an immersed specimen is allowed to drain. The percent absorption (% absorption) is the specific capacity of a specimen expressed as a percentage. The specific capacity (g/g) is the absorbent capacity per specimen weight.

In preparation for the test, a container was used having a minimum depth of 50 mm, in order to ensure that the specimens to be tested could be completely submerged within the testing fluid. The testing fluid temperature was desirably at 23 +/- 3 degrees C. Each specimen of material was cut in a square of 101 by 101 +/- 3 mm (4 by 4 +/- 0.04 inch), desirably at least three (3) specimens. Each sample was first weighed to the nearest 0.01 g. A timing device was started simultaneously with the placement of the first specimen into the testing fluid (as the sample was ideally being held in a three point clamp or with tongs). Testing was commenced at 30 second intervals. The soaking time for samples to be submerged in water was 3 minutes +/- 5 seconds, and 3 minutes +/- 5 seconds for oil. At the end of the soaking time, the specimen was removed from the testing fluid and hung in a diamond shape so that one corner was lower than the rest of the specimen. The specimens were then allowed to drain for 3 minutes +/- 5 seconds for water and 5 minutes +/- 5 seconds for oil. At the end of the draining time, the specimen was removed by holding a weighing dish under it and releasing it from the clamp. The specimen was then weighed to the nearest 0.01 g. The absorbent capacity was calculated in g/specimen area, by wet weight (g) - dry weight (g). The specific capacity (g/g) was calculated by absorbent capacity (g)/dry weight (g). The % absorption was calculated by specific capacity (g/g) X 100. The oil used was a white mineral oil.

### Vertical Wicking Rate

This method was used to measure the rate at which a fluid (water or oil) was absorbed into the nonwoven substrate as a result of capillary action. The test was used to determine the effects of capillary action of a fluid on a fabric which was suspended vertically and partially immersed in a test fluid. A reservoir of a container was filled such that specimens could be immersed in the reservoir fluid. A coloring agent (such as simple red food dye for water and acid fuchsin for oil) can be used to tint the test fluid to make it more visible as it wicks up the specimen. The test specimens can be placed in an oven if uniformly desired. The specimen holder height was adjusted such that the lower edge of the specimen strip extended approximately 25.4 mm (1 inch) into the test fluid.

Specimens were cut in a rectangular shape of 25.4 by 203.2 +/- 2.5 mm (1 by 8 +/-0.1 inch). As with all the previous test methods, the test samples were taken from material samples that were free of folds, wrinkles, or any distortions that would make the specimens abnormal from the rest of the test material. In testing, the test specimens were clamped to a stand (desirably one that allowed up to three (3) specimens to be hanging at the same time) with the long dimension vertical to the fluid and the lower end(s) hanging over the side of the reservoir to avoid prematurely wetting the specimens. The specimen height was adjusted so the lower edge of the strip extended approximately 25.4 mm into the fluid. It should be noted that a shorter specimen may be used as long as approximately 25.4 mm of the specimen is submerged in the test fluid. Once the free end of the specimen was placed in the test fluid, a stop watch was started as soon as the specimen contacted the fluid. The test was terminated when all specimens had been in the test for one minute. If oven drying is desired, it is desirably a gravity forced air oven capable of maintaining 105 degrees C +/- 3.6 degrees C. Water was desirably purified water having no higher than 5 micro-ohms per meter conductance. Oil was white mineral oil.

### Water or Oil Drop Test for Absorbency Rate of Nonwoven

This method was used to determine the separate absorbency rate of water and oil test fluid on a nonwoven material using a pipette to deliver a specified amount of the test fluid. The water/oil absorbency rate is the time required in seconds, for a specimen of nonwoven to absorb a specified amount of the individual test fluids. The absorbency rate is the average of a minimum of four absorbency readings (two or more per side of the material). In order to perform the test, enough test fluid was poured into small beakers to be used for the daily testing, and covered with a watch glass cover. Six (6) samples approximately 10,000 mm2, which if square would be 100 mm by 100 mm were used. Products which contain wet strength resin and which are less than 4 weeks old should be cured in a forced air oven at 105 +/- 2 degrees C for five minutes. The drop size to be used was 0.1 ml, with 1 sample of laminate material tested at a time. The specimens were draped over the top of a stainless steel beaker and covered with a template or use-equivalent testing device to hold the specimen in place. A minimum of 2 drops were tested on each side of the material. The pipette was filled with the required amount of the oil or water. The pipette tip was held approximately 25 mm (one inch) above the specimen and at a right angle to the specimen. Simultaneously the test fluid was dispensed from the pipette and the timer was started. Then the test fluid was absorbed to the point where light was not reflected from the surface of the test fluid, the timer was stopped. The timer was not reset between readings. Each side of the specimen material had a 180 second maximum time limit. If the individual readings went above 180 seconds, individual time readings were reported. The specimen was repositioned and repeated with a second drop on the same side of the material. The specimen was then turned over and repeated for a total of four drops (2 on each side). If drop spread reached the edge of the specimen, the test was discontinued. The timer was ideally stopped between specimens. However, if the timer was not stopped, the total number of seconds should be divided by the total number of readings. The oil used was white mineral oil.

### Bond Strength of Stretch-Bonded Laminate (also known as SBL) Material

The test was used to determine the attachment strength between component layers of laminated fabrics. The force of separation was measured at an approximately 180 degree angle. The method was developed using MTS TestWorks® for Windows software. The efficiency of bonding between component layers of the laminated fabric was determined by measuring the force required to delaminate the fabric. The force of separation values, expressed to the nearest 0.1 gram, are an indication of how well the fabric was bonded.

For the purposes of this test, the "bond strength" was the force of separation that was required to delaminate the component layers of the test specimen at an approximate 180 degree angle over a specified distance. "Delamination" for the purposes of this test was the separation of the plies/components of the laminated fabric due to a failure of the bonding mechanism that held the plies together. The stretch-bonded laminates tested were composites containing the pre-stretched elastic layer which had been bonded with one spunbond ply on each of the elastic layer outer surfaces (facing layers), and then hydroentangled with a hydrophilic web.

The cross-head speed was set at 300 +/- 10 mm/min (12 +/- 0.4 inch/min), the load cell unit allowed for the values to fall between 5 and 95 percent of the full-scale load. The start measurement was at 16 +/- 1 mm and the end measurement was at 170 +/- 1 mm.

It was desirable if possible for the specimen to be tested within 1 hour of manufacture. The samples were initially cut from the laminate of approximately 300 mm (12 inches) in the machine direction (MD) by a full deckle width. A sufficient number of smaller samples were then cut from the larger specimen, in a uniformly spaced manner and so that a minimum of 75 percent of the sample was surveyed. Each of the smaller samples were cut from the larger sample specimen at approximately 75 mm (3 inches) in the cross-machine direction (CD) by 175 mm (7 inches) in the machine direction (MD). It was desirable that the samples be kept in the order in which they were initially cut from the larger specimen sample, with the order maintained throughout the testing.

So as to initially delaminate an end of the samples for further testing, the following procedures were employed. In a fume hood, isopropyl alcohol 90% (IPA) was poured in a container to a maximum depth of 6 mm (0.25 inch). One end of each sample to be tested was lightly touched at the 75 mm end, to the surface of the IPA. The contacted end of the specimen was blotted by placing a layer of absorbent material on a flat surface, then placing the wetted specimen on the absorbent material. The specimen was covered with a layer of absorbent material, and with a hand, even pressure was applied for approximately 1-second to the wetted end of the specimen. While firmly holding the individual specimens, the 75 mm blotted end was stretched and released, as the stretch and release action aided in the initial delamination of the layers. The spunbond side of the specimen was carefully (only partially) peeled away from the elastic layer and the other side of the spunbond facing layer, under 38 +/-13 mm (1.5 +/-0.5 inch) so that the elastic layer was evenly exposed for each sample.

The spunbond facing layers of the specimens were placed in grips of the tensile tester with the evenly distributed elastic layer facing outward as follows. The specimen was centered in the grips with the grips closed. Slack of the samples between the grips was removed without initiating further specimen separation, and the grips were closed. The specimens were held vertically between the two closed grips. The crosshead was initiated. The test was finished and the crosshead was returned. The specimen was then removed from the grip. Slippage of material between the grips should not have been observed. It is suggested that Instron 200 lb. maximum load grips be employed if slippage is observed.

The following equipment was used for the testing. A Tensile Tester MTS Criterian 42 - Nonwovens Bundle (INSTRON). Test Macro for either Testworks 4 or Bluehill 2 programs. A face grip of 1 inch by 3 inch. A load cell of 5000 grams is typically used.

**Table 1**

| Conditioned and dried basis weight values in Table 1 suggest some small amount of hydroentanglement into an apertured film based stretch bonded laminate that has been hydroentangled with a cellulosic base sheet. However, the absorbent properties and SEM images show some pulp to be hydroentangled into such apertured film based stretch bonded laminate. | | | | |
|---|---|---|---|---|
| Basis Weight Test | Basis Wt. Conditioned (g/m^2) | | Basis Wt. Dried (g/m^2) | |
| | AVG | SD | AVG | SD |
| Control apertured film based stretch-bonded laminate | 118 | 1 | 117 | 1 |
| Hydroentangled apertured film based stretch-bonded composite | 118 | 4 | 115 | 4 |

**Table 2**

| Vertical Absorbent Capacity | Vertical Absorbent Capacity: Mineral Oil (%) | | Vertical Absorbent Capacity: Water (%) | |
|---|---|---|---|---|
| | AVG | SD | AVG | SD |
| Control apertured film based stretch bonded laminate | 777 | 10 | 149 | 33 |
| Hydroentangled apertured film based stretch bonded composite | 658 | 13 | 265 | 25 |

Vertical Absorbent Capacity for mineral oil and water shows an apertured film based stretch-bonded laminate as being absorbent to mineral oil before and after pulp was hydroentangled into the substrates. However, some oil absorbency is lost upon hydroentangling. Substantial gains in water capacity are achieved, lending to a substrate that has balanced absorbency to both oil and water. The increase in absorbency to water in the hydroentangled apertured film-based stretch-bonded laminate suggests enough pulp was entangled to impact absorbency.

As a comparison, the same test was performed on the cellulosic- type wiper sheet, in either one (1) to four (4) sample- types by itself. The cellulosic and spunbond wiper sheet used for comparison was itself a hydroentangled wiper available from Kimberly- Clark Professional under the WYPALL brand of wipers, specifically, WYPALL X80, HYDROKNIT brand nonwoven product designation. The results are noted below for mineral oil, motor oil, and water. The stretch-bonded, hydroentangled, prototypes demonstrated similarly high mineral oil capacities.

**Table 2A**

| | **Sample 1** | | | **Sample 2** | | | **Sample 3** | | | **Sample 4** | | |
|---|---|---|---|---|---|---|---|---|---|---|---|---|
| | | | | | | | | | | | | |
| ***Meas*** | **Avg** | **Std Dev** | **(N)** | **Avg** | **Std Dev** | **(N)** | **Avg** | **Std Dev** | **(N)** | **Avg** | **Std Dev** | **(N)** |
| *Oil Capacity (%)* | 317.98 | 6.49 | 5 | 343.61 | 10.22 | 5 | 332.5 | 5.87 | 5 | 310.87 | 5.24 | 5 |

**Table 2B Sample 1**

| | |
|---|---|
| Water Capacity (g/4"x4") | 4.8 (480%) |
| Motor Oil Capacity | 5.4 (540%) |

**Table 3**

| Vertical Wicking Rate in the MD and CD, shows trends similar to Vertical Absorbent Capacity. Wicking of mineral oil remains unchanged w/ and w/out pulp entangled. However, substantial improvements in wicking of water is achieved upon entangling pulp into the apertured film-based stretch bonded laminate. | | | | |
|---|---|---|---|---|
| Vertical Wicking Rate | MD Vertical Wicking Rate: Oil (cm @ 30sec) | CD Vertical Wicking Rate: Oil (cm @ 30sec) | MD Vertical Wicking Rate: Water (cm @ 30sec) | CD Vertical Wicking Rate: Water (cm @ 30sec) |
| | AVG | AVG | AVG | AVG |
| Control apertured film-based stretch-bonded laminate | 1.5 | 1.7 | 0.0 | 0.0 |
| Hydroentangled apertured film-based stretch-bonded composite | 1.5 | 1.7 | 1.5 | 0.9 |

**Table 4**

| Drop Test for Absorbency of mineral oil and water showing substantial gains in absorbency of water upon hydroentangling. | | |
|---|---|---|
| Drop Test for Absorbency | Drop Test for Absorbency: Mineral Oil (avg seconds) | Drop Test for Absorbency: Water (avg seconds) |
| | AVG | AVG |
| Control apertured film-based stretch-bonded laminate | 2 | >180 |
| Hydroentangled apertured film-based stretch bonded composite | 2 | 56 |

**Table 5**

| In performing Laminate Peel Strength (i.e., the strength of bond between the facing and the film) testing, suggest the bond of the facings to the film (in the film-based stretch-bonded laminate) is significantly improved at the point in which the pulp is entangled into the substrate. This suggests a "tying together" of the laminate layers by the pulp. This occurred in the apertured film-based stretch-bonded laminate sample, suggesting the pulp penetrates the film apertures and ties together the laminate layers. | | |
|---|---|---|
| Laminate Peel Strength | Peel Strength Average Load (gf) | Peel Strength Average Load (gf) |
| | AVG | SD |
| Control Apertured film-based stretch-bonded laminate | 1187 | 237 |
| Hydroentangled Apertured film-based stretch-bonded composite | * | * |

| | | |
|---|---|---|
| *Hydroentangled Apertured film-based stretch-bonded composite could not be tested for composite peel strength because the peel stopped/failed at the start of the pulp interface. | | |

An additional set of demonstrative samples were made in accordance with the invention as illustrated in Figures 4-4D. In particular, an apertured film-based stretch bonded laminate in accordance with Siqueira was made including a middle film layer and two tan- colored, 13.5 gsm polypropylene spunbond facings (one on each side of the elastic film). In these samples the apertures of the film were positioned in a zig-zag pattern (as seen in Figure 4), in which consecutive aperture holes 31 were staggered. The overall pattern of holes 31 in the film material 82 was in a zig-zag pattern 81 along the machine direction, but with the aperture holes 31 having an extended length along the cross-machine direction. The hydrophilic layer that was hydroentangled with the apertured film- based, stretch-bonded laminate was a white pulp sheet as previously described.
Such aperture zig-zag pattern 80 in the hydroentangled stretch bonded composite 24 can be seen from the pulp side 40 in Figure 4A. The zig-zag pattern is also visible 85 from the wire side 42 of the hydroentangled stretch bonded composite 24 as seen in Figure 4B. White pulp was visually observed on each of the tan facings following hydroentanglement of the pulp sheet and the apertured film-based, stretch bonded laminate. The white pulp was observed to take on a pattern that was similar to the zig-zag aperture pattern in the film layer. Such pulp placement indicates the process of stretching the stretch-bonded laminate and hydroentangling, results in the opening of the film apertures, and penetration of the staple fibers into and through the apertures, such that all layers in the elastic laminate, including the wire-side hydrophobic inelastic layer, contain some measure of staple fiber. Figure 4C illustrates a magnified photographic image of the pulp side 40 of the hydroentangled stretch bonded composite 24. Figure 4D illustrates a magnified photographic image of the wire side 42 of the hydroentangled stretch bonded composite 24. In the image, pulp fibers 87 are present in substantially aligned zig-zag rows 86, corresponding to the rows of apertures in the film layer within the composite. The rows of pulp fibers 86 are separated by rows having little to no pulp, and which correspond to areas of the film layer without apertures.

The sheet materials produced in accordance with this invention may be used in a variety of end product applications. For example, such sheet materials may be used for a variety of wipe-type products in which drapability, elasticity, and absorbency for both oil and water cleaning activities are desired. It is envisioned that the elastic and absorbent wipers may have beneficial use in penetrating tight areas to be cleaned. It is also contemplated that such sheet materials have end product applications in the technical areas of filtration, medical garments, covers, and bandages, and the personal care area, such as in the ears or side panels of baby/child care diapers, and adult feminine care applications.

While the invention has been described in detail with respect to the specific embodiments thereof, it will be appreciated that those skilled in the art, upon attaining an understanding of the foregoing, may readily conceive of alterations to, variations of, and equivalents to these embodiments. Accordingly, the scope of the present invention should be assessed as that of the appended claims and any equivalents thereto.

## Claims

1. A process for making a stretch-bonded elastic nonwoven composite (24) **characterised by** including the steps of:
a) providing a machine-direction elastic, apertured film-based, stretch-bonded nonwoven laminate layer (20), itself having an apertured elastic film layer (30) and at least one inelastic layer (32, 34);
b) stretching the stretch-bonded laminate layer (20) in the machine direction such that the at least one inelastic layer (32, 34) is in a generally flattened configuration, and no rupture of the inelastic layer (32, 34) occurs;
c) providing a hydrophilic fibrous layer (22) on the stretched, apertured film-based, stretch-bonded nonwoven laminate layer (20), the fibrous layer (22) including either staple fibers, substantially continuous fibers, pulp fibers or a combination thereof;
d) hydroentangling the fibers (22A)of the hydrophilic fibrous layer (22) into the elastic stretched, apertured film-based, stretch-bonded nonwoven laminate layer (20) to produce a hydroentangled stretch-bonded elastic nonwoven composite (24) that is absorbent to both aqueous and oil-based liquids;
e) allowing the hydroentangled stretch-bonded elastic nonwoven composite (24) to dry and relax;
f) storing said hydroentangled stretch-bonded elastic nonwoven composite (24) or moving said composite (24) to a further product manufacturing process.

2. The process of claim 1, wherein said machine direction elastic apertured film-based, stretch-bonded laminate (20) includes an elastic apertured mono-layered or multi-layered film.

3. The process of claim 2, wherein said elastic apertured monolayered or multilayered film includes apertures (31) configured in multiple directions along said film dimensions, or wherein said elastic apertured monolayered or multi-layered film includes apertures (31) having a longer dimension primarily along the cross-machine direction (CD).

4. The process of claim 1, wherein said machine direction elastic apertured film-based, stretch bonded laminate (20) includes two inelastic layers (32, 34), one of each inelastic layer (32, 34) bonded to a separate side of a middle elastic apertured film layer (30).

5. The process of claim 1, wherein the stretching step is accomplished by a series of progressively faster moving rolls (13, 15).

6. The process of claim 5, wherein the stretching step is accomplished by a pair of rolls (13, 15) in an S-wrap arrangement in which the ratio of speeds between the second roll (15) farthest from the laminate source and the first roll (13) closer to the laminate source is between about 1.1:1 and 5:1, or wherein the ratio of speeds is between about 1.5:1 and 3:1.

7. The process of claim 1, wherein the hydrophilic fibrous layer (22) is cellulosic based.

8. The process of claim 7, wherein the hydrophilic fibrous layer (22) is present initially in a basis weight range of between about 2 and 200 gsm.

9. The process of claim 1, wherein the pressure of fluid utilized in the hydroentanglement step is between about 500 and 5000 psi (about 3.4MPa and 34.5MPa), alternatively between about 1400 and 3000 psi (about 9.65MPa and 20.7MPa), and/or wherein the hydroentangled webs are moved passed a hydroentanglement manifold at a distance of between about 0.25 inch and 2 inches (about 6.35mm and 50.8mm).

10. The process of claim 1, wherein the elastic apertured film layer (30) of the elastic apertured film-based, stretch-bonded laminate (20) has an open aperture area in the film layer (30) of between about 2 and 40 percent before hydroentanglement, or wherein the open aperture area in the film layer (30) is between about 10 and 30 percent.

11. A stretch-bonded elastic nonwoven composite (24) **characterised by** including a machine-direction elastic apertured film-based, stretch-bonded laminate layer (20) that has been hydroentangled throughout all of its laminate layers with a hydrophilic fibrous layer (22).

12. The stretch-bonded elastic nonwoven composite of claim 11, wherein said apertured film-based, stretch-bonded laminate layer (20) is comprised of a middle apertured, machine-direction elastic film (30) that has been laminated between two inelastic nonwoven layers (32, 34) wherein said two inelastic nonwoven layers (32, 34) are desirably selected from the group consisting of spunbond, meltblown, and bonded carded webs.

13. The stretch-bonded elastic nonwoven composite of claim 12, wherein said hydrophilic fibrous layer (22) has a basis weight of between about 2 and 200 gsm and includes cellulosic fibers.

## Patentansprüche

1. Ein Verfahren zur Herstellung eines streckgebundenen elastischen Vliesverbundstoffs (24), **dadurch gekennzeichnet, dass** es die folgenden Schritte beinhaltet:
a) Bereitstellen einer in Maschinenrichtung angeordneten elastischen, gelochten folienbasierten, dehnungsverbundenen Vlieslaminatschicht (20), die selbst eine gelochte elastische Folienschicht (30) und mindestens eine unelastische Schicht (32, 34) aufweist;
b) Dehnen der dehnungsverbundenen Laminatschicht (20) in Maschinenrichtung, derart dass die mindestens eine unelastische Schicht (32, 34) in einer allgemein abgeflachten Konfiguration vorliegt und es nicht zum Zerreißen der unelastischen Schicht (32, 34) kommt;
c) Bereitstellen einer hydrophilen Faserschicht (22) auf der gedehnten, gelochten folienbasierten, dehnungsverbundenen Vlieslaminatschicht (20), wobei die Faserschicht (22) entweder Stapelfasern, im Wesentlichen endlose Fasern, Zellstofffasern oder eine Kombination davon beinhaltet;
d) Wasservernadeln der Fasern (22A) der hydrophilen Faserschicht (22) in die elastische gedehnte, gelochte folienbasierte, dehnungsverbundene Vlieslaminatschicht (20), um einen wasservernadelten dehnungsverbundenen elastischen Vliesverbundstoff (24) herzustellen, der sowohl wasser- als auch ölbasierte Flüssigkeiten absorbiert;
e) Trocknen- und Entspannenlassen des wasservernadelten dehnungsverbundenen elastischen Vliesverbundstoffs (24);
f) Lagern des wasservernadelten dehnungsverbundenen elastischen Vliesverbundsstoffs (24) oder Zuführen des Verbundstoffs (24) zu einem weiteren Produktherstellungsprozess.

2. Verfahren nach Anspruch 1, worin das in Maschinenrichtung angeordnete elastische gelochte folienbasierte, dehnungsverbundene Laminat (20) eine elastische gelochte einschichtige oder mehrschichtige Folie beinhaltet.

3. Verfahren nach Anspruch 2, worin die elastische gelochte einschichtige oder mehrschichtige Folie Öffnungen (31) beinhaltet, die in mehreren Richtungen entlang der Folienabmessungen konfiguriert sind, oder worin die elastische gelochte einschichtige oder mehrschichtige Folie Öffnungen (31) beinhaltet, die eine längere Abmessung hauptsächlich entlang der Maschinenquerrichtung (CD) aufweisen.

4. Verfahren nach Anspruch 1, worin das in Maschinenrichtung angeordnete elastische gelochte folienbasierte, dehnungsverbundene Laminat (20) zwei unelastische Schichten (32, 34) beinhaltet, wobei jeweils eine der unelastischen Schichten (32, 34) an eine separate Seite einer mittleren elastischen gelochten Folienschicht (30) gebunden ist.

5. Verfahren nach Anspruch 1, worin der Dehnungsschritt durch eine Reihe von sich schrittweise schneller bewegenden Walzen (13, 15) ausgeführt wird.

6. Verfahren nach Anspruch 5, worin der Dehnungsschritt durch ein Paar Walzen (13, 15) in einer s-förmig wickelnden Anordnung ausgeführt wird, in der das Verhältnis der Geschwindigkeiten zwischen der zweiten Walze (15), die am weitesten von der Laminatquelle entfernt liegt, und der ersten Walze (13), die näher an der Laminatquelle liegt, zwischen etwa 1,1:1 und 5:1 liegt oder wobei das Verhältnis der Geschwindigkeiten zwischen etwa 1,5:1 und 3:1 liegt.

7. Verfahren nach Anspruch 1, worin die hydrophile Faserschicht (22) auf Cellulose basiert.

8. Verfahren nach Anspruch 7, worin die hydrophile Faserschicht (22) anfänglich in einem Flächengewichtsbereich von zwischen etwa 2 und 200 g/m2 vorliegt.

9. Verfahren nach Anspruch 1, worin der im Schritt des Wasservernadelns genutzte Druck der Flüssigkeit zwischen etwa 500 und 5000 psi (etwa 3,4 MPa und 34,5 MPa) liegt, alternativ zwischen etwa 1400 und 3000 psi (etwa 9,65 MPa und 20,7 MPa), und/oder worin die wasservernadelten Bahnen in einem Abstand von zwischen etwa 0,25 Zoll und 2 Zoll (etwa 6,35 mm und 50,8 mm) an einem Wasservernadelungsverteiler vorbeibewegt werden.

10. Verfahren nach Anspruch 1, worin die elastische gelochte Folienschicht (30) des elastischen gelochten folienbasierten, dehnungsverbundenen Laminats (20) einen Bereich mit einer offenen Öffnung in der Folienschicht (30) aufweist, der vor der Wasservernadelung zwischen etwa 2 und 40 Prozent ausmacht oder wobei der Bereich der offenen Öffnung in der Folienschicht (30) zwischen etwa 10 und 30 Prozent ausmacht.

11. Dehnungsverbundener elastischer Vliesverbundstoff (24), **dadurch gekennzeichnet, dass** er eine in Maschinenrichtung angeordnete elastische gelochte folienbasierte, dehnungsverbundene Laminatschicht (20) beinhaltet, deren gesamte Laminatschichten mit einer hydrophilen Faserschicht (22) wasservernadelt wurden.

12. Dehnungsverbundener elastischer Vliesverbundstoff nach Anspruch 11, worin die gelochte folienbasierte, dehnungsverbundene Laminatschicht (20) eine mittlere gelochte, in Maschinenrichtung angeordnete elastische Folie (30) umfasst, die zwischen zwei unelastischen Vliesschichten (32, 34) laminiert wurde, worin die zwei unelastischen Vliesschichten (32, 34) vorzugsweise aus der Gruppe bestehend aus Spinnvlies-, heißluftgezogenen und gebundenen kardierten Bahnen ausgewählt werden.

13. Dehnungsverbundener elastischer Vliesverbundstoff nach Anspruch 12, worin die hydrophile Faserschicht (22) ein Flächengewicht von zwischen etwa 2 und 200 g/m2 aufweist und Cellulosefasern beinhaltet.

## Revendications

1. Procédé de fabrication d'un composite en non tissé élastique lié sous extension (24) caractérisé en comprenant les étapes :
a) de fourniture d'une couche (20) stratifiée de non tissé élastique dans la direction de la machine, lié sous extension, à base d'un film perforé, ayant elle-même une couche de film élastique perforé (30) et au moins une couche non élastique (32, 34) ;
b) d'étirement de la couche (20) stratifiée liée sous extension dans la direction de la machine de sorte que l'au moins une couche non élastique (32, 34) se trouve dans une configuration généralement aplanie, et qu'aucune rupture dans la couche non élastique (32, 34) n'a lieu ;
c) de mise en place d'une couche fibreuse (22) hydrophile sur la couche (20) stratifiée de non tissé lié sous extension à base de film perforé étirée, la couche fibreuse (22) incluant soit des fibres discontinues, des fibres substantiellement continues, des fibres de pulpe ou une combinaison de celles-ci ;
d) d'hydro-enchevêtrement des fibres (22A) de la couche fibreuse (22) hydrophile en la couche (20) stratifiée de non tissé lié sous extension à base de film perforé étirée de manière élastique pour produire un composite non tissé élastique lié sous extension hydro-enchevêtré (24) qui est absorbant à la fois des liquides aqueux et des liquides à base d'huile ;
e) de laisser le composite non tissé élastique lié sous extension hydro-enchevêtré (24) se sécher et se détendre ;
f) de stockage dudit composite non tissé élastique lié sous extension hydro-enchevêtré (24) ou de déplacement dudit composite (24) vers un autre procédé de fabrication d'un produit.

2. Procédé selon la revendication 1, dans lequel ledit stratifié (20) lié sous extension, à base d'un film perforé élastique dans la direction de la machine inclut un film monocouche ou multicouche perforé élastique.

3. Procédé selon la revendication 2, dans lequel ledit film élastique perforé monocouche ou multicouche inclut des perforations (31) configurées dans de multiples directions le long des dites dimensions de film, ou dans lequel ledit film élastique perforé monocouche ou multicouche inclut des ouvertures (31) ayant une dimension plus longue principalement le long dans le sens travers de la machine (CD) .

4. Procédé selon la revendication 1, dans lequel ledit stratifié (20) lié sous extension, à base d'un film perforé élastique dans la direction de la machine inclut deux couches non élastiques (32, 34), dont une couche non élastique (32, 34) étant liée à un côté séparé d'une couche de film perforé élastique centrale (30).

5. Procédé selon la revendication 1, dans lequel l'étape d'étirement est accomplie par une série de rouleaux (13, 15) se déplaçant progressivement plus rapidement.

6. Procédé selon la revendication 5, dans lequel l'étape d'étirement est accomplie par une paire de rouleaux (13, 15) dans un arrangement à enveloppe en S, dans lequel le rapport des vitesses entre le deuxième rouleau (15) le plus éloigné de la source de stratifié et le premier rouleau (13) le plus proche de la source de stratifié est entre environ 1,1 : 1 et 5 : 1, ou dans lequel le rapport des vitesses est entre environ 1,5 : 1 et 3 : 1.

7. Procédé selon la revendication 1, dans lequel la couche fibreuse (22) hydrophile est à base de cellulose.

8. Procédé selon la revendication 7, dans lequel la couche fibreuse (22) hydrophile est présente initialement dans une plage de poids de base entre environ 2 et 200 gsm.

9. Procédé selon la revendication 1, dans lequel la pression du fluide utilisé dans l'étape d'hydro-enchevêtrement est entre environ 500 et 5000 psi (environ 3,4 MPa et 34,5 MPa), alternativement, entre environ 1400 et 3000 psi (environ 9,65 MPa et 20,7 MPa), et/ou dans lequel les tissus enchevêtrés sont déplacés après une géométrie d'hydro-enchevêtrement à une distance entre environ 0,25 pouces et 2 pouces (environ 6,35 mm et 50,8 mm).

10. Procédé selon la revendication 1, dans lequel la couche de film perforé élastique (30) du stratifié (20) lié sous extension, à base de film perforé élastique a une zone d'ouverture ouverte dans la couche de film (30) entre environ 2 et 40 pour-cent avant l'hydro-enchevêtrement, ou dans lequel la zone d'ouverture ouverte dans la couche de film (30) est entre environ 10 et 30 pour-cent.

11. Composite non tissé lié sous extension élastique (24) caractérisé en incluant une couche (20) stratifiée liée sous extension, à base d'un film perforé élastique dans la direction de la machine qui a été hydro-enchevêtrée à travers toutes ses couches de stratifié avec une couche fibreuse (22) hydrophile.

12. Composite non tissé lié sous extension élastique selon la revendication 11, dans lequel ladite couche (20) stratifiée liée en extension à base du film perforé est composée d'un film élastique dans la direction de la machine (30) perforé au milieu qui a été stratifié entre deux couches non tissées non élastiques (32, 34), où lesdites couches non tissées non élastiques (32, 34) sont choisies en fonction d'un souhait dans le groupe constitué de tissus filés-liés, obtenus par fusion-soufflage, et cardés-liés.

13. Composite non tissé lié sous extension élastique selon la revendication 12, dans lequel ladite couche fibreuse (22) hydrophile a un poids de base entre environ 2 et 200 gsm et comprend des fibres cellulosiques.
